# EUROPÄISCHE PATENTSCHRIFT

(11) **EP 0 931 986 B1**
(45) Veröffentlichungstag und Bekanntmachung des Hinweises auf die Patenterteilung: **20.11.2002**
(21) Anmeldenummer: 99101043.0
(22) Anmeldetag: 22.01.1999
(51) Int. Cl.: F24D 11/02, F24D 3/12, F24J 2/04

(54) **Solarenergieversorgte Heiz- und Warmwasseranlage für Gebäude**
Solar heating and hot water installation for buildings
Installation solaire de chauffage et d'eau chaude pour bâtiments

(30) Priorität: 23.01.1998 DE 29801126 U
(43) Veröffentlichungstag der Anmeldung: 28.07.1999
(73) Patentinhaber: Lohrmann, Norbert, 01454 Radeberg (DE)
(72) Erfinder: Kopatschek, Andreas, 01591 Riesa (DE); Lohrmann, Norbert, 01454 Radeberg (DE)
(74) Vertreter: Hempel, Hartmut, Dipl.-Phys.

(56) Entgegenhaltungen:
- EP-A- 0 656 450
- EP-A- 0 711 958
- US-A- 3 262 493
- US-A- 4 119 143

## Beschreibung

Die Erfindung betrifft eine solarenergieversorgte Heiz- und Warmwasseranlage für Gebäude, enthaltend mindestens einen Solarkollektor mit einem hydraulischen, die Solarenergie in Wärmetauscher transportierenden Solarverteiler, wobei der Solarkollektor, der Solarverteiler und vorlauf- und rücklaufseitige Verteilerrohre einen durchgängigen Flüssigkeitskreislauf bilden, einen daran angeschlossenen Kombispeicher höchster Temperaturebene mit einem Warmwasserbereiter und mit einer Fußboden-/Innenwandheizung sowie mehrere im Gebäudebodenbereich befindliche, energieauf- und entladbare Anlagenspeicher nachgestufter Temperaturebenen zum Eintrag, zur Speicherung und zum Austrag der Solarenergie, eine mit einem der Anlagenspeicher in Verbindung stehende Außenwandheizung, mindestens eine thermosensorengestützte Regelungsanlage sowie eine zugeordnete Sicherheitstechnik, wobei die Regelungsanlage mit den den Speichern zugeordneten Verteilern des Solarverteilers signaltechnisch verbunden ist und ein rangvorgegebenes Zusammenspiel zwischen den Speichern bezogen auf die bereitgestellte Solarenergie und die abgeforderte Speicherenergie durchführt, wodurch die jeweils den vorhergehenden Speicher verlassende, in der Solarverteilerflüssigkeit verbleibende Solarenergie in mindestens einen der Anlagenspeicher eintragbar ist.

Eine derartige Energieversorgungsanlage für Gebäude ist in der DE 195 33 475 A1 bzw. in der WO 97/10474 beschrieben. Dabei weist der dachinstallierte Solarkollektor Schläuche oder Rohre auf, die zwischen der Dachhaut und einer darunter angeordneten Dämmschicht mäanderförmig verlegt sind. Der Solarkollektor ist in wenigstens zwei Bereiche mit je einem Flüssigkeitskreislauf unterteilt. Im Gebäudebodenbereich ist ein Feststoff-Wärme-Speicher angeordnet, dem mittels eingebetteten Schläuchen oder Rohren Wärme zugeführt oder entnommen werden kann. Der Gesamtwärmespeicher enthält vier Anlagenspeicher, nämlich einen zentralen, einen zentraläußeren und einen gebäudeseitlichen sowie einen peripheren Anlagenspeicher mit je einem eigenen Flüssigkeitskreislauf. Im Wärmespeicherbetrieb wird über thermisch gesteuerte Ventile aus dem Flüssigkeitskreislauf jedes Bereichs des Solarkollektors primär dem Flüssigkeitskreislauf des zentralen Wärmespeichers und sekundär den Flüssigkeitskreisläufen der beiden äußeren Wärmespeicher Flüssigkeit zugeführt, wenn die Temperatur der Flüssigkeit aus dem Kreislauf der jeweiligen Anlagenspeicher wenigstens um einen Wert im Bereich von 2 bis 8°C, vorzugsweise 2°C, höher ist als die Temperatur des jeweiligen Feststoffspeichers. Im Wärmeentnahmebetrieb wird durch thermisch gesteuerte Ventile primär aus dem Flüssigkeitskreislauf der beiden äußeren Wärmespeicher und sekundär aus dem Flüssigkeitskreislauf des zentralen Wärmespeichers Flüssigkeit über Kollektoren in eine Heizanlage (z.B. eine Außenwandheizung) des Gebäudes gepumpt. Sowohl die Solarkollektoren als auch die Anlagenspeicher sind mit den eigenen Vor- und Rückläufen dabei parallel zu Vorlauf und Rücklauf eines gebäudeinneren Verteilers (Kollektors) angeschlossen.
Aus den Anlagenspeichern verschiedener Temperaturebenen kann über Ventile in Außenwände eingebaute Rohrsysteme Wärme zur Heizung des Gebäudes zugeführt werden. Die Außenwandheizung enthält energiespeichernden Beton, darin befindliche mäanderförmige Rohrsysteme und eine nach außen wärmeisolierende Dämmschicht. Alle thermisch steuerbaren Ventile können zentral über eine mit einem Rechner versehene Regelungsanlage nach einem vorgegebenen Programm über Relais oder Stellmotoren bedient werden.
Ein Problem besteht darin, daß zur Ausbildung eines kompakten Feststoffspeichers wegen der dabei verwendeten verschiedenen Materialien und von zusätzlich unterirdisch horizontal eingebrachten Dämmschichten ein zu hoher Bearbeitungsaufwand erforderlich ist. Montier- und materialaufwendig ist auch die zusätzliche Ausbildung der Zwischenverteilungseinrichtungen (Kollektoren) für die Erdwärmespeicher. Durch die Kollektoranordnungen sind die Erdwärmespeicher parallel zueinander in den Rücklauf der Solarkollektoren geschaltet, so daß zur Aufrechterhaltung des Flüssigkeitskreislaufes der Solarkollektoren beispielsweise ein zusätzliches Ventil notwendig ist. Außerdem ist nach einmaliger Speicherung der Solarenergie in einem Speicher kein weiterer Energieeintrag durch die noch energiebeladene Flüssigkeit in einem anderen der parallel angeordneten Speicher vorgesehen. Bedingt durch die parallele Anbindung der Anlagenspeicher an den Verteiler wird ein Großteil der transportierten Solarenergie rücklaufseitig wieder den Solarkollektoren zugeführt, die dann überwiegend im Hochtemperaturbereich arbeiten.

Des weiteren ist eine Anlage zur Versorgung von Verbrauchern von Wärmeenergie und eine Vorrichtung hierfür aus der EP 0 711 958 A1 mit mehreren Kollektoren bekannt. Die Ausgangsleitungen eines Solarkollektors sind an den Eingang einer dem Solarkollektor zugeordneten kompakten Verteilereinrichtung gelegt, die mit einer Mehrzahl von Ausgängen versehen ist, an die jeweils eine Vorlaufleitung zu Verbrauchern (Heizungen, Speicher) von Wärmeenergie mit unterschiedlichen abgestuften Temperaturebenen angeschlossen sind, wobei durch die Verteilereinrichtung einer der Verbraucher auswählbar ist, dem die solarenergietragende Flüssigkeit zuführbar ist. Die auf einen Solarkollektor bezogene Verteilereinrichtung weist eine sternartige Anordnung der nur verteilenden Verlaufsleitungs-Ausgänge an die Verbraucher auf.

Dabei sind die Verbraucher mit unterschiedlicher Temperaturebene außerhalb der Verteilereinrichtung in Serie geschaltet, wodurch sie nacheinander von der Flüssigkeit durchströmt werden können. Die Rücklaufleitungen der Verbraucher mit niedriger Temperaturebene sind an die Eingänge einer Sammlereinrichtung gelegt, die mit einer Ausgangsleitung ausgebildet ist, welche an den Eingang einer Wärmepumpe legbar ist. Durch die Sammlereinrichtung ist z.B. derjenige Speicher auswählbar, der für die Energieverarbeitung der Wärmepumpe seine Energie bereitstellt.

Die Ausgangsleitung eines Sonnenkollektors ist an den Eingang der als eine Vorrichtung ausgebildeten und dem Solarkollektor zugeordneten Verteilereinrichtung gelegt, wobei die Verteilereinrichtung mit einer Mehrzahl von Ausgängen versehen ist, an welche die jeweils zu den Verbrauchern führenden Vorlaufleitungen unmittelbar angeschlossen sind.
Die jeweilige Rücklaufleitung eines zur Wärmeeintragung vorgesehenen Verbrauchers führt wahlweise direkt, also ohne eine weitere Verteilereinrichtung zu passieren, an die Vorlaufleitung des Verbrauchers mit der nächsttieferen Temperaturebene, ohne auch an die ursprüngliche Verteilereinrichtung zurückgeführt zu werden, und danach über eine Sammlereinrichtung zur Vorlaufleitung einer Wärmepumpe.

Jeder Verbraucher ist also über seine zugehörige, an der Verteilereinrichtung beginnende Vorlaufleitung an die Ausgänge der Verteilereinrichtung angebunden. Alle Verbraucher mit verschiedenen Temperaturebenen haben an der Verteilereinrichtung gleiche Anschlussbedingungen. Jeder Verbraucher ist somit derselben Verteilereinrichtung zugeordnet.

Außerdem ist die Wärmepumpe durch die spezielle Ausbildung der Verteilereinrichtung und der der Wärmepumpe zugehörigen Sammlereinrichtung derart an die Verbraucher angeschlossen, dass die Wärmepumpe mit jedem Verbraucher verschiedener Temperaturebene verbunden ist. Dabei ist die Wärmepumpe mit ihrem Rücklauf direkt in den Vorlauf zu den Verbrauchern geschaltet.

Da die Wärmepumpe parallel zum Solarkollektor mit Verteilereinrichtung an die Vorlaufleitungen der Verbraucher geschaltet angeschlossen ist, ist sie in der Lage, mit der zugeführten Energie, die erhöht werden kann, je nach Bedarf alle Verbraucher über deren Vorlaufleitung mit dieser erhöhten Energie direkt zu versorgen.

Die Regelungsanlage ist mit den den Verbrauchern zugeordneten Ventilen der Verteilereinrichtung signaltechnisch verbunden, wobei ein rangvorgegebenes Zusammenspiel zwischen den Verbrauchern bezogen auf die bereitgestellte Solareneergie besteht, wobei die jeweils den vorhandenen Verbraucher verlassende, in der Solarverteilerflüssigkeit verbleibende Solarenergie in mindestens einen der nachfolgenden Verbraucher eintragbar ist.

Ein Problem besteht darin, daß alle Verbraucher, insbesondere Heizkörper, Fußbodenheizungen, Innenwandheizungen, Außenwandheizungen derart in Serie mit Speichern geschaltet sind, daß zur geeigneten Ladung mit Wärmeenergie aus der Wärmepumpe zumindest ein zusätzlicher. Vorlaufanschluß von der Sammlereinrichtung aus erforderlich ist. Sowohl der Einsatz von Verteilereinrichtungen bzw. Sammlereinrichtungen für den definierten Eintrag von Wärme in einen ausgewählten Verbraucher als auch jeweils die hohe Anzahl von verteilenden Vorlaufsrohren und sammelnden Rücklaufrohren zu den Verteiler- und Sammlereinrichtungen macht die bekannte Anlage sehr material- und kostenaufwendig.

Durch einen zweiten oder mehrere vorlaufunabhängige Kollektoren mit eigener Verteilereinrichtung erfolgt eine Komplizierung der Anlage, wobei erst im Bereich der Verteilereinrichtungen und der Sammlereinrichtungen eine engere Verbindung der Solarkollektoren herbeigeführt wird.

Die Sammlereinrichtungen sind zur Durchführung einer Vorlaufund Rücklaufstrategie unter ganzheitlicher Einbindung der Wärmepumpe erforderlich. Deshalb kann die Anlage mit Verteilerund Sammlereinrichtungen als ein aufwendiges und kompliziertes System angesehen werden, das wiederum nur durch mindestens eine kompakte und steuerbare Ventil-Scheibenvorrichtung bewältigt werden kann.

Es ist aus der DE 28 56 018 A1 eine Anordnung zur Regelung der Wärmeverteilung in einem Solarhaus mit einem dachinstallierten Solarkollektor bekannt. In der Anordnung sind an einem Solarverteiler mehrere Wärmetauscher mit angeschlossenen Speichern, insbesondere einem Warmwasserspeicher, einem Solarspeicher und einem Schwimmbad über Vorlauf und Rücklauf parallel zueinander angeschlossen. Es ist ein Rohrleitungssystem zum Verbinden der Energieerzeuger und Energieverbraucher vorhanden, in dem mindestens eine Umwälzpumpe zum Transport des darin befindlichen Wärmeträgers eingebaut ist. Sowohl für Sommerbetrieb als auch für Winterbetrieb sind jeweils zugeordnete Regelkreise vorgesehen, die einen relativ hohen Bauelemente- und Platzaufwand sowie zusätzliche Einrichtungen für die jahreszeitliche Umschaltung der Regelkreise besitzen. Ein weiteres Problem besteht darin, daß durch die Außenwand hindurch Wärme verlorengeht.

Eine andere solarthermische Heiz- und Brauchwasserbereitungsanlage ist aus der DE 296 04 530 U1 bekannt. Die Anlage enthält einen Solarkollektor, eine Wärmepumpe, isolierte Rohrleitungen und einen Kombispeicher, Regler sowie Temperaturprogrammierer und Sicherheitstechnik. Der geschwärzte Solarabsorber mit Solarwasser-Temperaturfühler wird vom Heizwasser ohne Gefrierschutzmittel durchflossen, liegt auf der Dachisolation getrennt durch eine Hitzeschutzfolie auf und kann von einer Isolationsplatte sowie nach außen von einer regendicht eingeschindelten transparenten Wärmedämmung abgedeckt sein. Der Solarabsorber ist desweiteren mit einer darunter angeordneten Solarwasser-Umwälzpumpe mit nachgeschaltetem Rückschlagventil und Bypaß-Magnetventil sowie dem isolierten Heizwasserspeicher mit innen befindlichen Brauchwasser-Wärmetauscher sowie einem Wärmepumpentauscher verbunden. Letzterer steht wiederum mit einer Wärmepumpe, mit nachgeschaltetem Erdwärme-Absorber sowie Heizwasser-Temperaturfühler und Wärmepumpenregler in Verbindung. Der Erdwärme-Absorber kann neben der biegesteifen Hausfundamentplatte aus frostsicher horizontal verlegten PE-Schlauchbündeln oder vertikalen Erdsonden bestehen, welche in einem geschlossenen System mit Sole gefüllt sind. Zum Vermeiden von Überhitzungen und zum Speicher solarer Überschußenergie besteht über das Dreiwegeventil eine Verbindung zum Erdwärme-Absorber.
Ein Nachteil besteht darin, daß die durch die Außenwand hindurchdringende Wärmetransmission nicht berücksichtigt wird.

Aus der DE 92 12 218 U1 ist eine Fassadenverkleidung für eine totale Wärmerückgewinnung mittels eines Außenwandspeichers bekannt, in der die vom Innenraum ausgehend erwärmten Außenwände an der Außenseite mit luftspaltbeabstandeten Dämmschichten versehen sind. Die zwischen Dämmschicht und Außenseite vorhandenen Luftkanäle dienen durch die eintretende Luftströmung über mehrere ins Innere des Gebäudes führende Luftkanäle zur Rückgewinnung von Wärme des Außenmauerwerks. Die Luftkanalausbildung an der Außenseite des Außenmauerwerks erfordert einen hohen Arbeitsaufwand.

Desweiteren sind Vorrichtungen zur Warmwasserbereitung mittels Solarenergie in der EP 0006210 A1 bzw. der EP 0006211 A1 beschrieben, die neben einem Solarkollektor drei auf verschiedene Temperaturebenen arbeitende Wärmetauscher, welche brauchwasserseitig in Reihe geschaltet sind, einen Latentwärmespeicher mit vernetztem, teilkristallinem Kunststoff als speicherndes Medium, diverse Leitungen, Ventile, eine Umwälzpumpe und eine elektrische Funktionsablaufsteuerung umfaßt, deren Eingangsgrößen Temperaturwerte sind, die von diversen Temperaturfühlern in den genannten Elementen erfaßt werden. Die beiden auf höheren Temperaturniveaus arbeitenden Wärmetauscher sind ferner brauchwasserseitig über je ein Mischventil bygepaßt. Je nach Sonneneinstrahlung bzw. Temperatur des zirkulierenden Mediums werden sukzessive die Wärmetauscher mit höherem oder tieferem Temperaturniveau oder Kombinationen davon in den Medium-Kreislauf eingeschaltet. Ferner ist ein Überhitzungsschutz vorgesehen, der das Zirkulations-Medium bei Überhitzungsgefahr sukzessive durch die Wärmetauscher mit den niedrigeren Temperaturniveaus leitet.
Fremdheizungsladekreisläufe sollen die Vorrichtung für den Ganzjahresbetrieb ergänzen. Trotz der kombiniert umfangreichen Ausbildung der Anlage erhöht die nicht geringe Wärmetransmission durch die Außenwand hindurch den Energieaufwand und beeinflußt somit die Größe und Ausdehnung der Anlage.

Aus der Druckschrift WO 96/09501 ist eine Solarenergiespeicheranlage mit einem Warmwasserbereitungssystem bekannt, das mehrere Speicherbehälter enthält, in denen die mittels einem Wärmeträger transportierte Solarenergie gespeichert werden soll.

In der Druckschrift DE 91 13 104 U1 ist eine weitere Solaranlage beschrieben, die aus Solarkollektoren, mindestens einem Feststoffspeicher und einer Wärmepumpe in einem geschlossenen Kreislauf besteht. Das Wärmeträgermedium ist Luft, die erhitzt zum Feststoffspeicher geführt ist und dort mittels eines Luftwärmetauschers den stark isolierten Feststoffspeicher aufheizt. Die anschließend austretende, abgekühlte Luft wird von einer Wärmepumpe in eine Kühlbox abgeleitet. Alle Wandungen, insbesondere Innen- und Außenwände sollen zusätzlich zum Mauerwerk mit Schwerbetonsteinen ausgebildet sein, die Luftkanäle sowie Heißlufteintrittsöffnungen sowie entsprechende Austrittsöffnungen enthalten.
Ein Problem besteht darin, daß die Feststoffspeicher im Bereich der Innen- und Außenwände angebracht sind und im wesentlichen aus schwerem kostenaufwendigem Basaltsteinsplittbeton bestehen.

Aus der Druckschrift DE 291 07 774 A1 ist ein als Bodensaugspeicher ausgebildetes Bodenvolumen unter den Gebäudekörpern bzw. dem Fundamentkörper bekannt. Der Bodensaugspeicher wird bei Überschuß von Solarenergie über Leiteinrichtungen (Rohre) mit Wärme aufgeladen, wobei wärmedämmende Schichten die eingelagerte Bodenwärme verlustarm speichern und der Bodensaugspeicher je nach Bedarf an Wärme an anderer Stelle wieder entladen werden kann. Die umfangreiche Bodenschichtwärmedämmung ist sehr bau- und kostenaufwendig.

Ein weiteres integriertes Wärmeverteil- und Speichersystem ist aus der DE 30 25 520 A1 bekannt, die für eine Niedrigtemperaturheizung in Gebäuden aus einer Kombination von Langzeitwärmespeichern aus Erdschichten für die Speicherung von zeitweise nicht benötigter Energie von Wärmequellen, insbesondere von Solarkollektoren vorgesehen ist. Die zentralen oder dezentralen Wärmepumpen helfen bei ungenügender Vorlaufstemperatur das Gebäude zu heizen, wobei das Fernwärmenetz als Primärquelle genutzt wird. Die unterirdischen Langzeitwärmespeicher sind in einer feuchten Boden- und Gesteinsschicht mit einer Bodenisolation in 15 bis 25 m Tiefe und einer Deckisolation unterhalb der Erdoberfläche mit Zwischenwänden zur getrennten Wärmespeicherung ausgebildet.
Ein Problem besteht darin, daß die Ausbildung der tiefenerschlossenen Langzeitwärmespeicher für wesentlich größere Gebäude, aber nicht für kleinere Gebäude, insbesondere für Wohnhäuser vorgesehen ist, da sie für z.B. nur eine Familie bautechnisch und und kostenmäßig sehr aufwendig ist. Ein weiterer Nachteil besteht darin, daß die Wärmetransmission im Außenwandbereich des Gebäudes hoch ist.

Alle bekannten Lösungen betreffen zwar umfangreiche ausgebildete Einzellösungen und sind in sich logisch und geschlossen. Sie bieten aber keine ganzheitliche Lösung für eine mögliche Klimatisierung der Räume innerhalb eines Gebäudes, da die Wärmetransmission durch die Außenwände hindurch einen zusätzlichen Energienachschub aus den aufladbaren Speichern erfordert, was für eine ganzjährige Heizung eines Gebäudes problematisch ist.

Außerdem sind die meisten der Solaranlagen ausschließlich auf eine optimal und wirtschaftlich arbeitende Brauchwasseranlage ausgelegt. Dabei sind die eingesetzten Solarkollektoren derart ausgebildet, daß die optimale Leistungsabgabe hochtemperaturorientiert von oberhalb 60 bis 80° C Kollektortemperatur liegt. Die Solarkollektoren haben in der Regel eine Stillstandstemperatur von zum Teil über 200° C.

In einigen der genannten Lösungen werden für die Sole-Wärmepumpe unterirdische Erdkollektoren benutzt. Die Rohrleitungen sind dabei in einer Tiefe von ca. 1,0 - 1,5 m verlegt und entziehen der Erde Energie durch Auskühlung. Die Auskühlung kann bis zum Frostboden führen. Die außerhalb des Gebäudes vorhandene Solarenergie kompensiert zwar oft diese Auskühlung, da die Wärme durch den Regen in die ausgekühlten Erdschichten vordringt. Nachteilig wirkt sich die hohe Abkühlung aber auf das Pflanzenwachstum, insbesondere bei über dem Erdkollektor liegenden Nutzflächen, aus.

Durch die Nutzung eines bekannten Kombispeichers (im Pufferspeicher liegender Warmwasserbereiter) ist es möglich, Solarenergie in die Heizungsanlage zu führen und gleichzeitig darin zur Warmwasserbereitung zu nutzen. Die Anlage setzt aber eine entsprechende Niedertemperaturheizung (Flächenheizung) voraus, um längerfristig das niedrige Temperaturniveau zu Heizzwecken nutzen zu können.

Die Mehrzahl der sich z.Z. auf dem Markt befindlichen Solaranlagen haben in der Regel keinerlei hydraulische Verbindung zum Erdkollektor einer Wärmepumpe.

Desweiteren sind die bekannten Solaranlagen nicht in der Lage, die ganzjährig zur Verfügung stehende Solarenergie durch eine thermosolare Gebäudedämmung rationell einzusetzen.

Der Erfindung liegt deshalb die Aufgabe zugrunde, eine solarenergieversorgte Heiz- und Warmwasseranlage für Gebäude zu schaffen, die derart geeignet ausgebildet ist, daß die ganzheitliche Ausbildung der Anlagentechnik zur größtmöglichen Solarenergieabgabe und -aufnahme in die Speicher sowie zum optimalen ganzjährigen Einsatz von Solarenergie zugrunde gelegt werden kann. Dabei soll sichergestellt werden, daß ganzjährig die Solarenergie aktiv für Wärmeerzeugung genutzt wird und ein annehmbares Behaglichkeitsfeld im Gebäude erzeugt werden kann.

Die Aufgabe wird durch die Merkmale des Patentanspruchs 1 gelöst. In der solarenergieversorgten Heiz- und Warmwasseranlage für Gebäude gemäß dem Oberbegriff des Patentanspruchs 1 sind der Kombispeicher und die Anlagenspeicher der nachgestuften Temperaturebenen über den jeweils eigenen Vorund Rücklauf an den Solarverteiler seriell hintereinander im rücklaufseitigen Verteilerrohr eingeschaltet angeschlossen, wobei der Anlagenspeicher mit der höchsten nachgestuften Temperaturebene über einen Wärmeaustausch wärmeaustragsseitig wahlweise indirekt mit dem Kombispeicher und/oder mit der Fußboden-/Innenwandheizung verbunden ist, wobei der Anlagenspeicher mit der niedrigsten Temperaturebene über einen Wärmeaustausch wärmeaustragsseitig wahlweise direkt mit einer Wärmepumpe verbunden ist, die den Kombispeicher über einen Wärmeaustausch wärmeeintragend unterstützt, wobei der Anlagenspeicher mit einer der mittleren Temperaturebenen über einen Wärmeaustausch wärmeaustragsseitig direkt mit der Außenwandheizung verbunden ist, die innerhalb von gebäudetragenden Außenwänden enthalten ist, in deren Kernbereich eine nach außen gerichtet wärmeisolierende, vertikale Dämmschicht, mindestens ein verlegtes, solarenergietransportierendes Rohrsystem sowie rohrsystemumgebend verfüllter Beton vorhanden sind, und wobei die Regelungsanlage mit den Pumpen-/Mischer-Baugruppen der Heizungen signaitechnisch derart verbunden ist, dass die jeweils einen Speicher verlassende Solarenergie je nach Bedarf über den Wärmeaustausch wärmeaustragsseitig in den Kombispeicher und/oder in die Heizungen übertragbar ist.

Die temperaturebenennachgestuften Anlagenspeicher sind unterirdisch angeordnet und stellen vorzugsweise einen Bodenplattenspeicher mit höherer Temperaturebene, einen gebäudezentralen Erdwärmespeicher mit mittlerer Temperaturebene und einen gebäudeseitlichen Erdwärmespeicher mit niedrigster Temperaturebene dar, wobei die Anlagenspeicher im wesentlichen als Kollektoren für die jeweils wärmeaustragsseitig angeschlossenen Heizungen dienen.

Die Vorlaufabzweigungen der angeschlossenen Speicher weisen im Solarverteiler gesteuerte (offen/geschlossen) Verteilerausgänge auf, die mit der Regelungsanlage bzw. mit zugehörigen Regelungseinrichtungen verbunden sind, die in einer vorgegebenen Rangfolge die Verteilerausgänge für die jeweils von Speicher zu Speicher weniger Solarenergie enthaltende Flüssigkeitsströmung derart öffnen, daß vorlaufseitig eine ständige Anströmung der Solarkollektoren mit der eine niedrige Temperatur zwischen 10 bis 30°C aufweisenden Flüssigkeit vorgesehen ist, wobei der Bodenplattenspeicher wahlweise indirekt mit dem Kombispeicher und/oder mit der Fußboden-/Innenwandheizung sowie der gebäudezentrale Erdwärmespeicher direkt mit der Außenwandheizung zur Übergabe der in ihm gespeicherten Solarenergie verbunden sind und der gebäudeseitliche Erdwärmespeicher direkt an die Wärmepumpe angeschlossen ist, die die dort gespeicherte Solarenergie je nach Bedarf direkt in den Kombispeicher führt.

Bei indirekter Kopplung sind ein wärmeeintragender Frostschutzmittelflüssigkeitskreislauf und ein davon getrennter wärmeaustragender Wasserkreislauf vorhanden sowie bei der direkten Kopplung ist der wärmeeintragende und wärmeaustragende Frostschutzmittelflüssigkeitskreislauf in einem Rohrsystem enthalten.

Die steuerbaren Verteilerausgänge können mit Ventilen, insbesondere mit Dreieckventilen versehen sein.

Den rücklaufseitigen Bereichen vor den Verteilerausgängen und den unmittelbaren Bereichen der Speicher sind jeweils Temperaturmeßstellen mit Thermosensoren zugeordnet, die die momentanen Rücklauf- bzw. Speichertemperaturen messen und zu deren signaltechnischen Weiterleitung mit den zugehörigen Regeleinrichtungen bzw. der Regelungsanlage verbunden sind, die die den jeweiligen Speichern zuzuordnenden Temperaturdifferenzen derart auswerten, daß je nach Solarenergieangebot die zugehörigen steuerbaren Verteilerausgängen im Solarverteiler umschalten.

In der Regelungsanlage sind vorzugsweise alle elektrotechnischen und elektronischen Regelungselemente zusammengefaßt untergebracht, die folgende Vorgänge vorzugsweise programmtechnisch betreiben und schalten:
1. Einschalten der Sole-Wärmepumpe mit den zugehörigen Betriebspumpen zur Versorgung der Wärmepumpe mit Soleflüssigkeit und Heizungflüssigkeit,
2. Einschalten der Umwälzpumpe für die Fußbodenheizung und/oder Innenwandheizung und Ausregeln des Mischers nach der Vorlauftemperatur am zugehörigen Sensor, der Außentemperatur am zugehörigen Sensor und einer Regelkurve,
3. Einschalten der Umwälzpumpe für die Außenwandheizungen innerhalb der Außenwände nach der Außentemperatur am zugehörigen Sensor und Ausregeln des Mischers nach der Solltemperatur, der Vorlauftemperatur am zugehörigen Sensor und einer Regelkurve,
4. Einschalten der Umwälzpumpe des Solarverteilers bei Erreichen einer Differenztemperatur zwischen der Temperatur am zugehörigen Sensor in den Rücklaufbereichen des Solarkollektors und der Temperatur am zugehörigen Sensor des gebäudeseitlichen Erdwärmespeichers,
5. Zuschalten der notwendigen Betriebspumpen der Sole-Wärmepumpe bei Wärmebedarf des Kombispeichers,
6. Einschalten der Umwälzpumpe für die Zirkulation des Brauchwassers entsprechend der Zeit,
7. Verarbeitung von vorzugsweise fünf Differenztemperaturen mit Einstellung einer Solltemperatur, einer MIN- und MAX-Temperatur und einer Sollwertabweichung,
8. Verarbeitung und Anzeige von mindestens einem Wärmemengenzähler.

Die Außenwandheizung ist vorzugsweise mit schalenden Mantelsteinen aufgebaut, die derart übereinander verrastet sind, daß bausteinbenachbarte, mantelinnere horizontale und vertikale Kern- bzw. Einfüllkanäle zur Rohrsystemverlegung und Betonverfüllung ausgebildet sind.

Die Mantelsteine sind dabei im Längs- und im Querschnitt vorzugsweise H-, doppel-H- oder mehrfach-H-förmig ausgebildet.

Die nach außen gerichteten schalenden Außenmäntel der Mantelsteine sind mit der im Kernbereich befindlichen wärmeisolierenden Dämmschicht versehen, wobei die den Außen- und Innenmantel verbindenden H-Stege vorzugsweise vollkommen oder teilweise umgeben aus Dämmaterial bestehen.

Der Betrieb zur Durchführung der Solarenergiespeicherung und - entnahme erfolgt folgendermaßen:
Die vom Kombispeicher z.B. nicht mehr aufnehmbare, überschüssige Solarenergie wird rangvorgegeben in mindestens einen der nachfolgenden wärmeungesättigten Speicher geladen. Dabei können die teilweise oder vollkommen mit Wärme gefüllten Speicher zeitgleich oder zeitversetzt zum Solarenergieeintrag je nach Bedarf wieder entladen werden, indem die Speicherenergie aus dem Bodenplattenspeicher wahlweise an den Kombispeicher und dadurch wahlweise an die Fußboden-/Innenwandheizung, aus dem gebäudezentralen Erdwärmespeicher an die wärmedämmgeschützten Außenwandheizungen und aus den mit der Wärmepumpe verbundenen unterirdischen gebäudeseitlichen Erdwärmespeicher an den Kombispeicher geliefert werden.

Die Rangvorgabe des Eintrags und des Austrags der Solarenergie ist dabei abhängig vom momentanen Wärmefüllstand der Anlagenspeicher, der durch die Thermosensorensignalleitung an die Regelungseinrichtungen bzw. Regelungsanlage aktionsvorbereitend mitgeteilt und dort bewertet wird.

Die Erfindung eröffnet die Möglichkeit, eine umfassendere und verlustarme aktive Nutzung der Solarenergie in allen massiv errichteten Gebäudearten und in jeder Klimazone zu erreichen. Dabei soll eine maximale und damit wirtschaftlich günstige Ausnutzung der Solarenergie erst ermöglicht werden. Dazu sind alle Anlagenteile für eine solare Energienutzung in den vorgesehenen Gebäuden zu verwenden und einzusetzen. Aus der Erfindung ergibt es sich, daß es mit der kombinierten Logik der solarenergieversorgten Anlage - Solarkollektor, thermosolarer Dämmung, solaren Speichern, Wärmepumpe sowie Flächenheizung - möglich ist, die Heiz- und Warmwasseranlage eines Gebäudes ganzheitlich auf der Versorgung durch Solarenergie aufzubauen.

Weiterbildungen und vorteilhafte Ausgestaltungen der Erfindung sind in weiteren Unteransprüchen angeführt.

Die Erfindung wird anhand eines Ausführungsbeispiels mittels mehrerer Zeichnungen erläutert.

Es zeigen:
- Fig. 1: eine schematische Darstellung der Anordnung von Anlagenteilen einer erfindungsgemäßen solarenergieversorgten Heiz- und Warmwasseranlage in einem Gebäude,
- Fig. 2: ein hydraulisches und elektrotechnisches Schaltschema der erfindungsgemäßen Anlage für das Gebäude und
- Fig. 3: eine schematische Darstellung der Außenwandheizung einer solarthermisch gedämmten Außenwand nach dem Prinzip der verlorenen Schalung mit Mantelsteinen.

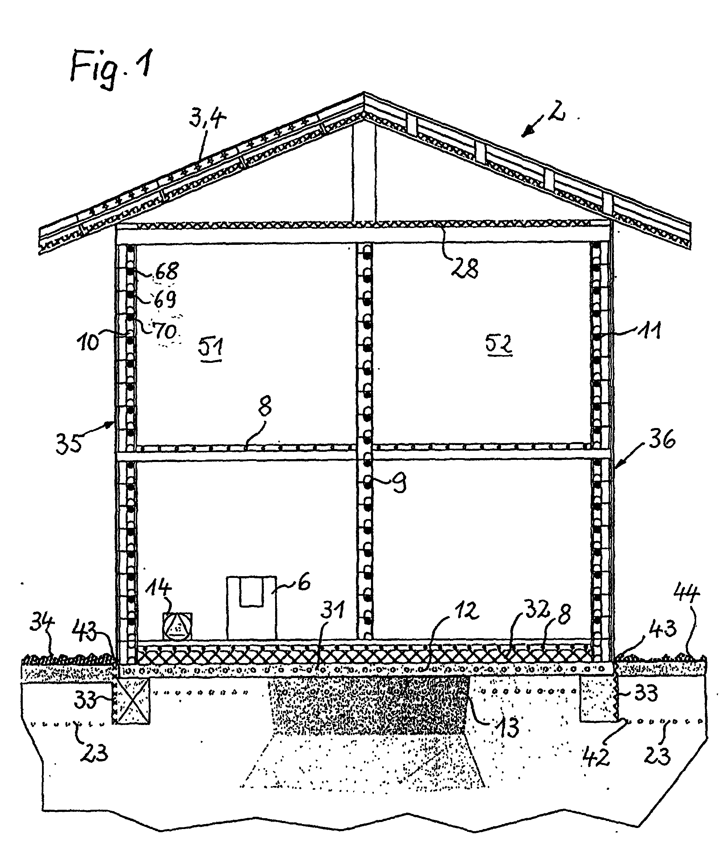

In den Fig. 1 bis 3 werden für gleiche Anlagenteile und Verbindungsleitungen mit gleichen Funktionen die gleichen Bezugszeichen verwendet. Dabei werden die Fig. 1,2 und 3 gemeinsam betrachtend erläutert.

In den Fig. 1,2,3 ist eine erfindungsgemäße solarenergieversorgte Heiz- und Warmwasseranlage 1 für ein Gebäude 2, insbesondere für ein Einfamilienhaus ohne Unterkellerung dargestellt. Die Anlage 1 besitzt auf dem Gebäudedach ein, zwei oder mehrere Solarkollektoren 3,4, die mit einem hydraulischen, die Solarenergie in Wärmetauscher 50,37,41,53 transportierenden Solarverteiler 5 verbunden sind. An den Solarverteiler 5 sind ein Kombispeicher 6 mit der höchsten Temperaturebene für eine innenräumliche Fußboden-/Innenwandheizung 8,9 sowie drei im Gebäudebodenbereich befindliche, energieaufladbare und -entladbare Anlagenspeicher 12,13,23 verschiedener nachgestufter Temperaturebenen - ein Bodenplattenspeicher 12 sowie zwei unterirdische Erdwärmespeicher 13,23 (gebäudezentraler, gebäudeseitlicher) - angeschlossen. Der gebäudezentrale Erdwärmespeicher 13 steht mit der Außenwandheizung 10,11 in Verbindung. Desweiteren sind eine thermosensorengestützte Regelungsanlage 15 sowie eine zugeordnete Sicherheitstechnik 16 vorhanden.

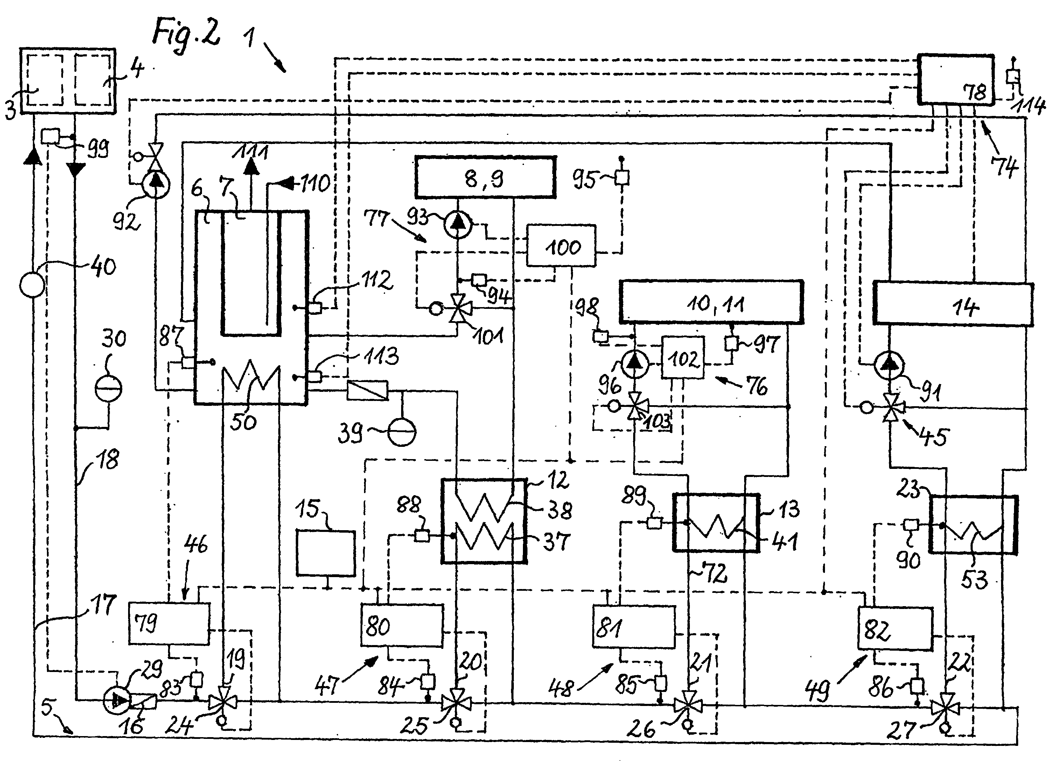

In Fig. 2 bilden der Solarkollektor 3,4 und der Solarverteiler 5 mit vorlauf- und rücklaufseitigen Verteilerrohren 17,18 einen durchgängigen Flüssigkeitskreislauf, wobei erfindungsgemäß an dessen rücklaufseitiges Verteilerrohr 18 der Kombispeicher 6 und die Anlagenspeicher 12,13,23 der nachgestuften Temperaturebenen über den jeweils eigenen Vor- und Rücklauf seriell hintereinander eingeschaltet angeschlossen sind, wobei der Bodenplattenspeicher 12 mit der höchsten nachgestuften Temperaturebene wärmeaustragsseitig wahlweise indirekt mit dem Kombispeicher 6 und/oder mit der Fußboden-/Innenwandheizung 8,9 verbunden ist, wobei der gebäudezentrale Erdwärmespeicher 13 mit der mittleren Temperaturebene wärmeaustragsseitig direkt mit der Außenwandheizung 10,11 und wobei der Anlagenspeicher 23 mit der niedrigsten Temperaturebene wärmeaustragsseitig wahlweise direkt mit einer Wärmepumpe 14, die den Kombispeicher 6 wärmeeintragend unterstützt, verbunden sind.
Die Regelungsanlage 15 ist mit den den Speichern 6,12,13,23 zugeordneten Verteilern 46,47,48,49 des Solarverteilers 5 und erfindungsgemäß mit den Pumpen-/Mischer-Baugruppen 76,77 der Heizungen 8,9,10,11 signaltechnisch derart verbunden, daß einerseits ein rangvorgegebenes Zusammenspiel zwischen den Speichern 6,12,13,23 bezogen auf die bereitgestellte Solarenergie und die abgeforderte Speicherenergie besteht, wobei die jeweils den vorhergehenden Speicher (z.B. den Kombispeicher) 6 oder 12,13 verlassende, in der Solarverteilerflüssigkeit verbleibende Solarenergie in mindestens einem der nachfolgenden Anlagenspeicher 12,13,23 gleichzeitig oder zeitversetzt eintragbar und erfindungsgemäß andererseits je nach Bedarf wärmeaustragsseitig in den Kombispeicher 6 bzw. in den Heizungen 8,9,10,11 übertragbar ist.

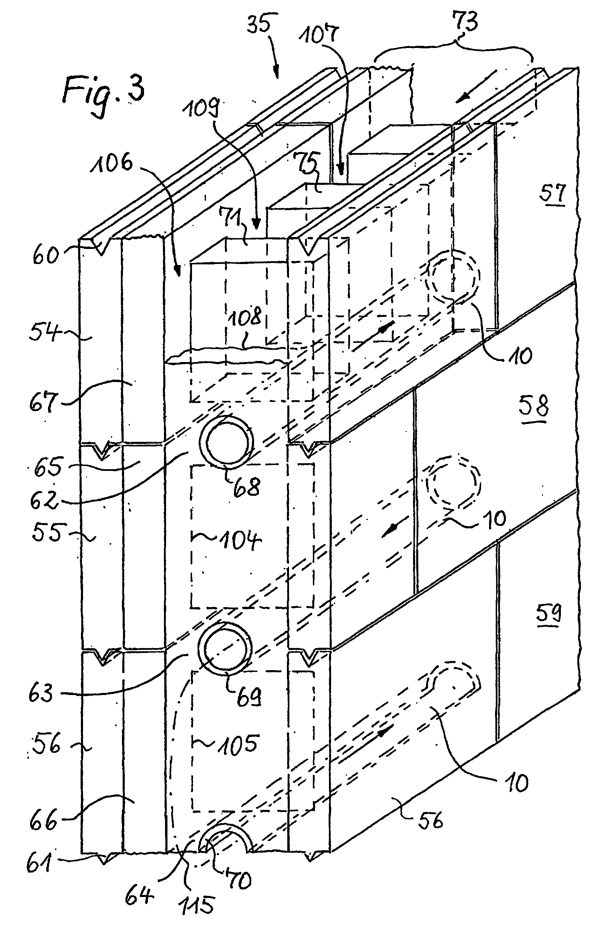

Erfindungsgemäß ist die Außenwandheizung 10,11 in Fig. 3 innerhalb der verlorenen Schalung enthalten, in deren Kernbereich 73 zumindest eine nach außen gerichtet wärmeisolierende, vertikale Dämmschicht 65,66,67, mindestens ein verlegtes solarenergietransportierendes Rohrsystem mit den Rohren 68,69,70;115 sowie rohrsystemumgebend verfüllter Beton für gebäudestabilisierende bzw. -tragende Außenwände 35,36 vorhanden sind.

Die temperaturebenennachgestuften Anlagenspeicher 12,13,23 sind unterirdisch angeordnet und stellen vorzugsweise einen Bodenplattenspeicher 12 mit höherer Temperaturebene, einen gebäudezentralen Erdwärmespeicher 13 mit mittlerer Temperaturebene und einen gebäudeseitlichen Erdwärmespeicher 23 mit niedrigster Temperaturebene dar, wobei die Anlagenspeicher 12;13;23 als Kollektoren für die jeweils wärmeaustragsseitig angeschlossenen Heizungen 6,8,9;10,11;14,6 dienen können.

Die Rohrsysteme mit den Rohren 68,69,70 der Außenwandheizungen 10,11 können vorzugsweise mäanderförmig in die beispielsweise in vertikale Längsabschnitte unterteilten Außenwände 35,36 eingebracht sein.

In Fig. 1 steht das Einfamilienhaus 2 auf einer Bodenplatte 31, kann aber auch auf entsprechenden Streifenfundamenten stehen, wobei die entsprechend gedämmten Streifenfundamente im Bereich der unterirdischen Außenwände als Frostschürzen 33 ausgebaut sind.

Der Bodenplattenspeicher 12 hat wahlweise in der Bodenplatte 31 zwei im Raster von 100 mm verlegte Rohrsysteme 37,38, die zwei Wärmetauscher darstellen, wobei das erste wärmeeintragende Rohrsystem 37 an dem Solarverteiler 5 angeschlossen und wobei das zweite wärmeaustragene Rohrsystem 38 mit dem Kombispeicher 6 und/oder mit der Fußboden-/Innenwandheizung 8,9 in genannter Reihenfolge kreislaufartig verbunden sein kann.

Der Bodenplattenspeicher 12 kann, wie in Fig. 2 gezeigt, zwei hydraulisch getrennte Rohrsysteme 37,38 besitzen. Durch das Rohrsystem 37 wird die Solarenergie in die Bodenplatte 31 eingetragen und gespeichert und vorzugsweise durch das andere Rohrsystem 38 ausgetragen. Die Bodenplatte 31 ist üblicherweise als Betonplatte ausgebildet und kann sich im Lauf der jährlichen Aufheizung auf die höhere Temperaturebene von ca. 50 bis 55° C erwärmen und bedarf deshalb einer entsprechenden Dämmschicht 32 nach oben. Durch die vorgegebene Betondicke (im Bereich zwischen 200 bis 300 mm) läßt sich der Bodenplattenspeicher 12 relativ genau berechnen und in seiner Wirkung und Nutzungszeit einschätzen. Dabei ergibt sich beispielsweise bei einem Gebäude 2 mit einer Grundfläche von etwa 120 qm und einer Plattendicke von 20 cm eine nutzbare Speicherkapazität von ca. 500 kWh. Die im Bereich des Bodenplattenspeichers 12 auftretenden Energieverluste können hauptsächlich vom Gebäude 2 selbst oder von den darunter und seitlich angelegten Erdwärmespeichern 13, 23 aufgenommen werden, so daß das zur Fußbodenheizung 8 führende Rohrsystem 38 nur wahlweise eingebracht ist.

Der gebäudezentrale Erdwärmespeicher 13 befindet sich unmittelbar unter der Bodenplatte 31 und dient dem Bodenplattenspeicher 12 als wärmeaufnehmende und zugleich wärmeisolierende Dämmschicht nach unten. Erstellt werden kann der Erdwärmespeicher 13 nach dem Ausbaggern und vor dem Einbringen der Sauberkeitsschicht. Das zugehörige Rohrsystem 72 ist im Raster von 100 mm verlegt und stellt im Speicherbereich einen Wärmetauscher 41 dar sowie ist auf eine Regelungseinrichtung 81 aufgeschaitet. Die Speicherwirkung des Erdwärmespeichers 13 ist stark abhängig von der Höhe des Grundwasserspiegels und vom Charakter der Wasserschicht (stehend oder fließend), zumal der Wasserspiegel in der Regel im Jahresverlauf in seiner Höhe schwankt. Der Wärmeaustrag aus dem Erdwärmespeicher 13 kann über die Mischer-Baugruppe 103 auf eine mittlere Temperaturebene zwischen 20 bis 40°C eingestellt werden. Falls sich der Erdwärmespeicher 13 auf etwa 1,5 bis 2,0 m Tiefe ausdehnen kann, steht eine Speicherleistung von ca. 1000 kWh zur Verfügung.

Der gebäudeseitliche Erdwärmespeicher 23 als dritter Solarenergie aufnehmender und einlagernder Anlagenspeicher befindet sich in Fig. 1 neben dem Gebäude 2 in der Höhe des Fußpunktes 42 der oben erwähnten Frostschürzen 33. Beim Ausbaggern der Fundamente ist es dafür zweckmäßig, einen ca. 2,0 bis 2,5 m breiten Streifen 34,44, mit einer Mindesttiefe (bei einer Bauweise ohne Keller) von 1,2 m zur Oberkante Erdreich 43 um das Gebäude 2 herum zusätzlich vorzusehen und freizulegen.

Der gebäudeseitliche, unterhalb der Streifen 34,44 angelegte Erdwärmespeicher 23 ist in Fig. 1 vorzugsweise horizontal und vertikal aufgebaut und besteht aus einem gleichmäßig flach im Raster von vorzugsweise 150 mm verlegten PE-Rohrsystem 53. Die vertikalen Bohrungen (nicht eingezeichnet) können dabei bis zu 2,5 m tief sein und sind mit dem gleich ausgebildeten verlegten Rohr vorzugsweise im Tauchsiederprinzip bestückt.

Der gebäudeseitliche Erdwärmespeicher 23 dient der Sole-Wärmepumpe 14 mit Hilfe der zugehörigen Regelungseinrichtung 74, insbesondere mittels eines Wärmepumpenreglers mit Pumpenlogik als Erdkollektor und wird auf Grund der direkten Anbindung an den hydraulischen Solarverteiler 5 und der anfallenden Wärmeverluste des gebäudezentralen Erdwärmespeichers 13 auf einer Speichertemperatur zwischen 10 bis 20°C (niedrigste Temperaturebene) mittels des Differenztemperaturreglers 49 inklusive der Regelungseinrichtung 82 gehalten. Die dabei vorhandene durchschnittliche Soletemperatur von 15° C und die notwendige, durch die Sole-Wärmepumpe 14 zu erzeugende Vorlauftemperatur für die Fußboden-/Innenwandheizung 8,9 von 35°C, ermöglichen ein ständiges Arbeiten im Bereich von Leistungszahlen (LZ) in der Größe von 6 - 8, was gegenüber den üblichen Leistungszahlen eine wesentliche Steigerung darstellt.

Die Differenztemperaturregler bestehen in der Regel aus einer Regelungseinrichtung, aus den zugehörigen Sensoren zur Temperaturmessung im Bereich vor/an der Vorlaufsabzweigung und am/im Speicher sowie aus einem umschaltbaren Dreiwegeventil am Verteilerausgang.

Kann der gebäudeseitliche Erdwärmespeicher 23 ein nutzbares Erdvolumen von ca. 160 cbm aufweisen (2,0 m Tiefe und 2,0 m Breite um das ganze Gebäude 2), dann steht der Sole-Wärmepumpe 14 ein Erdkollektor mit einer Leistung von ca. 500 kWh zur Verfügung, ohne daß der Erdwärmespeicher 23 vereisen kann. Die hydraulische Anbindung an die Solarkollektoren 3,4 ermöglicht durch die ständige Nachladung sogar eine Verdopplung der Speicherleistung.

Um den Wärmeverlust auch in Dachrichtung zu verringern, ist im Dachbereich gemäß der gültigen Wärmeschutzverordnung mindestens eine horizontale Dämmschicht 28 entsprechender Dicke angebracht.

Zum Aufbau des Einfamilienhauses 2 können einfach gehaltene, kostengünstige Solarkollektoren 3,4 eingesetzt werden. Zweckmäßig ist es, daß die Solarkollektoren 3,4 als Großflächenkollektoren ausgebildet sind, die einen Großteil der Dachfläche bedecken können. Vorzugsweise sind bei dem aktiven Solargebäude 2 die Dächer mit den Kollektoren 3,4 so optimal wie möglich nach Süden ausgerichtet und insbesondere die Kollektorneigung, z.B. bei Winkeln größer als 45°, dem Winterstand der Sonne angepaßt.

Zu den Solarkollektoren 3,4 gehört eine Pumpenbaugruppe 29, die mit ihrem Sicherheitsventil 16 die Solarkollektoren 3,4 auf einen inneren Druck von 6,0 bar absichert, wobei die Pumpenbaugruppe 29 vorzugsweise in das Rücklaufverteilerrohr 18 eingebunden ist. Die Ausbildung und Dimensionierung des zum Solarverteiler 5 gehörenden Ausdehnungsgefäßes 30 ist abhängig von der maximalem Betriebstemperatur, der Stillstandstemperatur, den jeweilig zugehörigen Glykolflüssigkeitsmengen sowie den Parametern der Sicherheitseinrichtung 16.

Der Kombispeicher 6 kann als ein Pufferspeicher herkömmlicher Bauart mit einem innenliegenden, nicht unbedingt notwendigen fremderhitzbaren Warmwasserbereiter 7 zum Einsatz kommen. Durch die Ablagerung von Solarenergie in den Kombispeicher 6 kann Brauchwasser erwärmt und die Solarenergie in die ihm angeschlossene Fußbodenheizung 8 bzw. Innenwandheizung 9 weitergeleitet werden. Der Warmwasserbereiter 7 mit einem Kaltwasserzufluß 110 und einem Warmwasserabgang 111 kann dabei als Edelstahlboiler oder als ein entsprechender Durchlauferhitzer im Kombispeicher 6 integriert eingebaut sein. Bei genügend großer Solarkollektorfläche können auch mehrere Kombispeicher 6 in die Anlage 1 eingesetzt sein. Der Wärmeeintrag in den Kombispeicher 6 zum Nachheizen kann gemeinsam mit der Wärmepumpe 14 oder anstelle zur Wärmepumpe 14 durch eine beliebige andere Wärmequelle (nicht eingezeichnet), insbesondere durch einen Elektroheizstab mit Nachtstrom oder mittels einer Gasbrennwerttherme erfolgen. Die vorgesehene Funktion und Nutzung des gebäudezentralen Erdwärmespeichers 13 wird im zweiten Fall nicht berührt. Der gebäudeseitliche Erdwärmespeicher 23 isoliert dabei den gebäudezentralen Erdwärmespeicher 13 gegen Wärmeverluste und kann auch zur Raumklimatisierung in Hitzeperioden dienen.

Die in der erfindungsgemäßen Anlage 1 vorhandene Sole-Wärmepumpe 14 in Fig. 2 ist derart dimensioniert ausgebildet, daß Soletemperaturen von etwa 15°C bis 25°C verarbeitet werden können. Die Größe der Sole-Wärmepumpe 14 richtet sich nach dem Wärmebedarf des Gebäudes 2, um bei einem Havariefall im Bereich der Solarkollektoren 3,4 bzw. des Solarverteilers 5 oder bei längerem Mangel an Solarenergie maximal die gesamte notwendige Leistung abfordern zu können. Die Sole-Wärmepumpe 14 umfaßt im wesentlichen die Verdichteranlage mit den geräteeigenen Wärmetauschern und der Regelungseinrichtung 74, die im wesentlichen die Sole- und die Heizungspumpe 91,92, Sicherheitsbauteile sowie den elektrischen Regler 78 mit Pumpenlogik und einen außentemperaturgesteuerten Vorlauftemperaturregler 45 (geräteeigener primärer Temperaturschutz) schaltet, wobei die erforderlichen Signale von den zugehörigen Sensoren 112,113,114 übertragen werden.

Durch die Anbindung an den hydraulischen Solarverteiler 5 ist es zweckmäßig, bei der Ausbildung der Wärmepumpe 14 zu berücksichtigen, daß die Soleflüssigkeit unter einem Druck von etwa 6,0 bar stehen kann. Die Heizungsseite zum Kombispeicher 6 weist eine übliche Druckabsicherung von 2,5 bar auf.

Durch die Abgabe von Solarenergie in das solarkollektorrücklaufseitige Verteilerrohr 18 für die seriell hintereinander eingeschalteten Wärmespeicher 6,12,13,23 werden die Solarkollektoren 3,4 vorlaufseitig ständig relativ kalt angeströmt und dadurch vorzugsweise mit einer maximalen Betriebstemperatur zwischen 50 bis 65°C betrieben. Auf Grund dessen, daß die Betriebstemperatur der Solarkollektoren 3,4 in der Heizperiode bei 10 bis 35° C liegt, ist es zweckmäßig, den maximalen Wirkungsgrad ebenfalls in dieser Temperaturebene zu halten.

In Fig. 2 ist der hydraulische Solarverteiler 5 im Schaltschema der Anlage 1 enthalten. Um die Solarenergie entsprechend ihres anliegenden Temperaturniveaus effektiv ausnutzen zu können, ist der einkreislaufartige, hydraulische Solarverteiler 5 ein notwendiger Teil der Anlage 1. Dem Solarverteiler 5 sind Temperaturmeßstellen mit Thermosensoren 83,84,85,86 vorzugsweise im Bereich vor den zugehörigen Verteilerausgängen 24,25,26,27 zugeordnet. Ebenso sind vorzugsweise innerhalb der unmittelbaren Bereiche der Speicher 6,12,13,23 Thermosensoren 87,88,89,90 angeordnet, die die momentanen Speichertemperaturen messen und vorzugsweise an die Regelungseinrichtungen 79,80,81,82 weiterleiten, die die den jeweiligen Speichern 6,12,13,23 zuzuordnenden Temperaturdifferenzen derart auswerten, daß je nach Energieangebot die zugehörigen Verteilerausgänge, insbesondere die Dreiwegeventile 24,25,26,27 im Solarverteiler 5 umschalten.

Im Bereich der Vorlaufsabzweigungen 19,20,21,22 der angeschlossenen Speicher 6,12,13,23 sind die gesteuerten (offen,geschlossen) Verteilerausgänge 24,25,26,27 vorzugsweise mit den Regelungseinrichtungen 79,80,81,82 verbunden, die in einer vorgegebenen Rangfolge 6-12-13-23 die Verteilerausgänge 24,25,26,27 für die jeweils von Speicher zu Speicher 6-12,12-13,13-23 weniger Solarenergie enthaltende Flüssigkeitsströmung derart öffnen, daß vorlaufseitig eine ständige Anströmung der Solarkollektoren 3,4 mit der eine Temperatur zwischen 10 bis 30°C aufweisenden Flüssigkeit gewährleistet ist, wobei der Bodenplattenspeicher 12 wahlweise indirekt mit dem Kombispeicher 6 und rücklaufseitig mit der Fußboden-/Innenwandheizung 8,9 über den Wärmetauscher 38 sowie der gebäudezentrale Erdwärmespeicher 13 direkt mit den Außenwandheizungen 10,11 über den Wärmetauscher 41 zur Übergabe der in ihm gespeicherten Solarenergie verbunden sind und der gebäudeseitliche Erdwärmespeicher 23 direkt über das wärmetauschende Rohrsystem 53 an die Wärmepumpe 14 angeschlossen ist, die die dort gespeicherte Solarenergie je nach Bedarf rücklaufseitig direkt dem Kombispeicher 6 zuführt.

Als energietransportierende Flüssigkeit können Frostschutzmittel-Lösungen, insbesondere Glykol, Sole, oder Wasser dienen.

Bei indirekter Kopplung sind beispielsweise ein wärmeeintragender Glykolflüssigkeitskreislauf 37 wegen des Anschlusses an den Glykolflüssigkeit enthaltenden Solarverteiler 5 und ein davon getrennter wärmeaustragender Wasserkreislauf 38 vorhanden sowie bei direkter Kopplung ist ein wärmeeintragender und wärmeaustragender Flüssigkeitskreislauf, insbesondere ein Glykolflüssigkeitskreislauf jeweils in den Verbund-Rohrsystemen 72,53 enthalten.

Der Solarenergieeintrag und -austrag in der erfindungsgemäßen solarenergieversorgten Heiz- und Warmwasseranlage 1 wird folgendermaßen durchgeführt:
Die in den solarenergiegesättigten Kombispeicher 6 nicht mehr aufnehmbare, in der Solarverteilerflüssigkeit verbleibende Solarenergie wird rangvorgegeben in mindestens einem der nachfolgenden seriellen Speicher 12,13,23 eingetragen. Dabei können die teilweise oder vollkommen mit Wärme gefüllten Speicher 12,13,23 zeitgleich oder zeitversetzt je nach Heiz- und Warmwasserbedarf wieder entladen werden, indem die Speicherenergien aus dem Bodenplattenspeicher 12 wahlweise an den Kombispeicher 6, aus dem gebäudezentralen Erdwärmespeicher 13 an die nach außen wärmedämmgeschützten Außenwandheizungen 10,11 und aus den mit der Wärmepumpe 14 verbundenen unterirdischen gebäudeseitlichen Erdwärmespeicher 23 an den Kombispeicher 6 geliefert werden.

Die Rangvorgabe des Eintrags und des Austrags der Solarenergie ist dabei abhängig vom momentanen Wärmefüllstand der Anlagenspeicher 12,13,23, der durch die Thermosensorensignalleitung an die Regelungseinrichtungen 79,80,81,82 bzw. an die Regelungsanlage 15 aktionsvorbereitend mitgeteilt und dort bewertet wird.

Durch die nachfolgend beschriebene Regelung erfolgt eine stetige Auswertung von allen den jeweiligen Speichern zuzuordnenden Temperaturdifferenzen, die je nach Bedarf eine gezielte Umschaltung der entsprechenden Verteilerausgänge 24,25,26,27 im Solarverteiler 5 auslösen.

Wenn eine nutzbare Temperaturdiffenz zwischen der Rücklauftemperatur am Sensor 83 und der anliegenden Temperatur am Sensor 87 des Kombispeichers 6 besteht, schaltet der zugehörige Verteilerausgang 24 vom Rücklauf des Verteilerrohres 18 auf den Vorlauf des Wärmetauschers 50 um und leitet die Solarenergie in den Wärmetauscher 50 des Kombispeichers 6. Nach dem Durchfließen des Wärmetauschers 50 wird in dessen Rücklauf die abgekühlte Glykolflüssigkeit zum hydraulischen Solarverteiler 5 zurückgeleitet. Gleichzeitig und/oder nachfolgend erfolgt eine Rücklauftemperaturmessung durch Sensor 84 und ein Vergleich mit der Speichertemperatur des Bodenplattenspeichers 12 am Sensor 88. Beim Vorhandensein einer für den Bodenplattenspeicher 12 nutzbaren Temperaturdifferenz erfolgt eine durch die Umschaltung des Verteilerausgangs 25 ausgelöste Einleitung der Glykolflüssigkeit in den Vorlauf des Rohrsystems 37 des Bodenplattenspeichers 12 mit anschließender Solarenergiespeicherung. In der angegebenen Folge werden die solaren Anlagenspeicher 13,23 mit ihren sich unterschiedlich einstellenden Temperaturebenen nacheinander von der Regelungsanlage 15 bzw. von den Regelungseinrichtungen 81,82 signaltechnisch über die Sensoren 85,89 bzw. 86,90 abgefragt bzw. angesprochen, vermessen und bei vorhandenem Wärmedefizit nach Umschaltung der Verteilerausgänge 26,27 nach Möglichkeit thermisch aufgeladen. Die Glykolflüssigkeit im Solarverteiler 5 erreicht nach dem gebäudeseitlichen Erdwärmespeicher 23 eine niedrige Temperatur. Dadurch ist eine ständige Anströmung der Solarkollektoren 3,4 über das vorlaufseitige Verteilerrohr 17 mit im Temperaturbereich von 10 bis 30°C kühler Glykolflüssigkeit ermöglicht.

Die Außenwandheizungen 10,11 können sich in den Außenwänden bzw. in den Außenmauerwerken 35,36 des gesamten Gebäudes 2 befinden. Dabei sind die Außenwände 35,36 mit den Rohren 68,69,70 verrohrt, in dem die solar erwärmbare Flüssigkeit, vorzugsweise Glykolflüssigkeit transportierbar und die Transmission durch die Außenwände 35,36 hindurch nach außen zu vernachlässigen ist.

Erfindungsgemäß sind in Fig. 3 für die Ausbildung der nach außen wärmedämmgeschützten Außenwandheizung 10 (11) wandintegrierte Schalelemente, vorzugsweise draufsichtig doppel-H-querschnittsförmige Mantelsteine 54,55,56,57,58,59 eingesetzt, in die schon während der Errichtung der Außenwand 35 (36) gleichzeitig oder unmittelbar nachfolgend horizontale Rohre 68,69,70 eingebracht sind, die über Vertikalrohre 115 (punktgestrichelt) in steinbenachbarten vertikalen Einfüllkanälen 106 vorzugsweise mäanderförmig miteinander verbunden sind. Dabei bilden sich jeweils bausteinbenachbart infolge der übereinandergesetzten, vorzugsweise mittels Nutrinnen 60 und Federeinfügungen 61 verrasteten Mantelsteine 56,50-55,58-54,57 mantelinnere horizontale Kernkanäle 64,63,62, in denen die zwischen den Stegen 71,75-104 (schematisch,gestrichelt), 104-105 (schematisch, gestrichelt), 105-usf. horizontal verlegten Rohre 68,69,70 gehaltert befestigt ist. Zwischen den Rohren 68,69,70 und den Außenmänteln der bausteinzugehörigen Schalung 54,55,56 sind in den Kernbereichen 73 jeweils vertikal gerichtete Dämmschichten 65,66,67, die vorzugsweise schon bei der Mantelsteinproduktion eingebracht worden sind, vorgesehen, die die Wärmetransmission nach außen blockieren.

Durch die Querstege 71,75 der Mantelsteine 54 bis 59 sind diese wie in Fig. 3 draufsichtig doppel-H-förmig ausgebildet. Die vertikalen Dämmschichten 65,66,67 und H-Querstege 71,75, 104,105 können z.B. aus Polystyrol bestehen.

Zwischen den Doppelstegen 71,75 und den Stegen benachbarter Mantelsteine 57 sind vertikale Einfüllkanäle 109,106,107 zur Einfüllung von flüssigem Beton vorhanden, der sowohl vertikal nach unten als auch in die horizontalen Kernkanäle fließt. Nach der Füllung mit Beton stellen die verbleibenden horizontalen Kernkanäle 62,63,64 energiespeichernde und außenwandstabilisierende Betonkerne dar. Z.B. ist in Fig. 3 im vertikalen Einfüllkanal 106 der Betonfüllstand 108 während eines Füllvorgangs gezeigt. Die Rohrqualität entspricht vorzugsweise dem Rohr für die Fußbodenheizung (17x2, sauerstoffdicht) 8 und ist in der gesamten Anlage 1 gleichartig ausgebildet.

Es ist bekannt, daß die Auswahl des Materials für die Dämmschicht 65,66,67, deren Dicke in den Außenwänden 35,36 bzw. der dadurch erreichte k-Wert, die zu erreichende Raumtemperatur, die vorhandenen inneren Energiegewinne und die anliegenden meteorologischen Daten den Wärmebedarf des Gebäudes 2 bestimmen.

Durch das in die Außenwand bzw. das Außenmauerwerk 35,36 eingebrachte Rohrsystem mit den Rohren 68,69,70 zuzüglich des umgebenden Betons ist es möglich, die Solarenergie in das Außenmauerwerk 35,36 einzubringen und dort gesteuert zu speichern. Durch das gesteuerte bzw. geregelte Aufheizen der Betonkerne im Außenmauerwerk 35,36 auf Temperaturen von ca. 20 bis 25° C ist es möglich, eine noch vorhandene, geringfügige Wärmetransmission trotz der Dämmschichten 65,66,67 durch das Außenmauerwerk 35,36 des Gebäudes 2 hindurch auszugleichen.

Mit der thermosolaren Außenwanddämmung im Bereich der Außenwandheizungen 10,11 kann, wie in Fig. 3 gezeigt, eine beheizte Außenwand 35 als Dämmung gegen tiefere Außentemperaturen erreicht werden. Durch die erfindungsgemäße Ausbildung der Außenwandheizungen 10 (11) können diese gleichzeitig als Wärmespeicher (Beton) und als Heizfläche für die innenliegenden Räume 51 (52) des Gebäudes 2 dienen.

Der gleiche Aufbau und dieselbe Wärmewirkung für die Räume 51,52 können durch das gleiche Verrohren der statisch notwendigen Innenwände im Gebäude 2 erreicht werden. Die beschriebene Wandverrohrung vorzugsweise in der Innenwand mit verlorener Schalung ändert nichts am k-Wert der Wand, sondern nur den daraus resultierenden Wärmeverlust für die Räume 51,52 bzw. das Gebäude 2.

Zur Außenwandheizung 10,11 gehört mindestens eine Pumpen-/Mischer-Baugruppe 96,76, mit der unter Einsatz einer Regelungseinrichtung 102, des Mischers 103 und der Sensoren 97,98 konstante Wandtemperaturen im Bereich von 20 bis 25°C eingestellt und abgesichert werden können.

Der nichtsolare Leistungsanteil an der Wärmegestaltung im Gebäude 2 wird durch die konventionell raumgeregelte Fußbodenheizung 8 aufgebracht. Die Fußbodenheizung 8 besitzt ebenfalls eine Pumpen-/Mischer-Baugruppe 77, arbeitet mit einer Vorlauftemperatur von 35°C und kann sich hydraulisch unter Einsatz einer Regelungseinrichtung 100, eines Mischers 101 und der Sensoren 94,95 vorlaufseitig direkt aus dem Kombispeicher 6 versorgen. Bei vorhandenem Anschluß an den Bodenplattenspeicher 12 kann das Heizwasser rücklaufseitig zur Temperaturanhebung durch das im Betonbodenplattenspeicher 12 befindliche Wärmetauscher-Rohrsystem 38 fließen. Der Heizwasser-Kreislauf enthält zumindest ein Ausdehnungsgefäß 39, für dessen Auslegung die notwendige Wassermenge des Kombispeichers 6 zuzüglich der sich in der Fußboden-/Innenwandheizung 8,9 befindlichen Wassermenge ausschlaggebend ist. Ist wahlweise kein Anschluß des Bodenplattenspeichers 12 zur Fußboden-/Innenwandheizung 8,9 bzw. zum Kombispeicher 6 vorhanden, unterliegt der Bodenplattenspeicher 12 nur der Speicherung und der Entnahme von Energie über die Verteilerrohre 17,18 des Solarverteilers 5.

In der Regelungsanlage 15 sind alle elektrotechnischen und elektronischen Regelungselemente der erfindungsgemäßen Anlage 1 zusammengefaßt untergebracht. Die Regelungsanlage 15 kann dabei vorzugsweise eine zentrale Einrichtung sein. Um Kosten zu sparen, kann es aber auch zweckmäßig sein, den Speichern 6,12,13,23 bzw. den Heizungen 6,8,9,10,11 sowie der Wärmepumpe 14 nur separat fungierende Regelungseinrichtungen 79,80, 81,82,74 zuzuordnen, die entweder kommunizierend oder separat arbeiten.

Die Regelungsanlage 15 betreibt und schaltet im wesentlichen folgende Vorgänge, die vorzugsweise programmtechnisch durchgeführt werden:
1. Einschalten der Sole-Wärmepumpe 14 mit den zugehörigen Betriebspumpen 91,92 für die Versorgung der Wärmepumpe 14 mit Soleflüssigkeit und Heizungflüssigkeit.
2. Einschalten der Umwälzpumpe 93 für die Fußbodenheizung 8 und/oder Innenwandheizung 9 und Ausregeln des Mischers 101 nach der Vorlauftemperatur am Sensor 94, der Außentemperatur am Sensor 95 und einer Regelkurve.
3. Einschalten der Umwälzpumpe 96 für die Außenwandheizungen 10,11 innerhalb der Außenwände 35,36 nach der Außentemperatur am Sensor 97 und Ausregeln des Mischers 103 nach der Solltemperatur, der Vorlauftemperatur am Sensor 98 und einer Regelkurve.
4. Einschalten der Umwälzpumpe 29 im Solarverteiler 5 bei Erreichen einer Differenztemperatur zwischen der Temperatur am Sensor 99 in dem Rücklaufbereich des Solarkollektors 3,4 und der Temperatur am Sensor 90 des gebäudeseitlichen Erdwärmespeichers 23.
5. Zuschalten der Sole-Wärmepumpe 14 mit allen notwendigen Betriebspumpen bei Wärmebedarf des Kombispeichers 6.
6. Einschalten der Umwälzpumpe 92 für die Zirkulation des Brauchwassers entsprechend der Zeit.
7. Verarbeitung von vorzugsweise fünf Differenztemperaturen mit Einstellung einer Solltemperatur, einer MIN- und MAX-Temperatur und einer Sollwertabweichung und
8. Verarbeitung und Anzeige von mindestens einem Wärmemengenzähler 40.

Durch das Vorhandensein eines RS-232-Anschlusses ist eine Verbindung zu einer Rechenanlage, einem Drucker, einer übergeordneten zentralen Leittechnik oder einer weiteren Regelungseinheit möglich. Die Regelungsanlage 15 bzw. die Regelungseinrichtungen 79,80,81,82;74 können in einem entsprechenden Schaltschrank bzw. einem Gehäuse untergebracht und neben der Sole-Wärmepumpe 14 und dem hydraulischen Solarverteiler 5 montiert sein. Der hydraulische Solarverteiler 5 kann dabei in kompakter Form gehäuseumgeben ausgebildet sein.

Ein Vorteil der Erfindung besteht darin, daß von einer Erreichung von Hochtemperaturen in den Solarkollektoren 3,4 abgesehen wird, weil, wie vordem geschrieben, die Hochtemperaturen in der Anlage 1 nicht wirtschaftlich nutzbar sind. Sollten dennoch Hochtemperaturen (z.B. 80°C) anfallen, so können sie zur Warmwasserbereitung im Warmwasserbereiter 7 direkt genutzt werden. Sind andererseits alle Anlagenspeicher 12,13,23 mit Solarenergie gefüllt und nicht weiter aufnahmebereit, dann besteht die Gefahr, daß die Solarkollektoren 3,4 durch die einstrahlende Solarenergie überhitzt werden. Dabei sichert das Sicherheitsventil 16, die Regelungsanlage 15 und das Ausdehnungsgefäß 30 die Anlage 1 ab, was weitgehend auch für das Ausdehnungsgefäß 39 gilt.

Die Erfindung besitzt den Vorteil, daß durch die wechselweise Nutzung der einzelnen verschiedene Temperaturebenen aufweisenden Speicher 6,12,13,23 entsprechend ihrem aktuellen Energiefüllstand eine annähernd vollkommene Ausnutzung der anliegenden Solarkollektortemperatur möglich ist. Auf Grund dessen, daß bei bestimmten Nutzungsregimen eine tiefere Temperatur als die Umgebungstemperatur genutzt wird, erfolgt eine Temperaturanhebung nicht nur durch die Globalstrahlung, sondern auch durch die Umgebungstemperatur.

Mit der Erfindung soll erreicht werden, einerseits mit Hilfe des Solarverteilers 5 als auch andererseits durch die Speicher-/Heizungskreisläufe 12/6,8,9;13/10,11;23/14,6 in und unterhalb des Gebäudes 2 eine ganzjährige solare Energieversorgung des Gebäudes 2 zu ermöglichen.

Durch die erfindungsgemäße, in geeigneter Kombination von bekannten Anlagenteilen ausgebildete solarenergieversorgte Heizund Warmwasseranlage 1 und der erfindungsgemäßen Einbindung der Außenwandheizung 10,11 mittels der horizontal heizrohrund betongefüllten Außenwände können die geforderten Niedrigenergiehaus-Kennwerte erreicht und überraschend positiv noch weit unterschritten werden.

### Bezugszeichenliste

- 1: Heiz- und Warmwasseranlage
- 2: Gebäude
- 3: Solarkollektor
- 4: Solarkollektor
- 5: Solarverteiler
- 6: Kombispeicher
- 7: Warmwasserbereiter
- 8: Fußbodenheizung
- 9: Innenwandheizung
- 10: Außenwandheizung
- 11: Außenwandheizung
- 12: Bodenplattenspeicher
- 13: Erdwärmespeicher, gebäudezentraler
- 14: Wärmepumpe
- 15: Regelungsanlage
- 16: Sicherheitsventil
- 17: Verteilerrohr (Vorlauf)
- 18: Verteilerrohr (Rücklauf)
- 19: Vorlaufabzweigung
- 20: Vorlaufabzweigung
- 21: Vorlaufabzweigung
- 22: Vorlaufabzweigung
- 23: Erdwärmespeicher, gebäudeseitlicher
- 24: Verteilerausgang
- 25: Verteilerausgang
- 26: Verteilerausgang
- 27: Verteilerausgang
- 28: Dämmschicht
- 29: Pumpenbaugruppe
- 30: Ausdehnungsgefäß
- 31: Bodenplatte
- 32: Dämmschicht
- 33: Frostschürze
- 34: Streifen
- 35: Außenwand
- 36: Außenwand
- 37: Rohrsystem
- 38: Rohrsystem
- 39: Ausdehnungsgefäß
- 40: Wärmemengenzähler
- 41: Wärmetauscher
- 42: Fußpunkt
- 43: Oberkante Erdreich
- 44: Streifen
- 45: Temperaturschutz
- 46: Verteiler
- 47: Verteiler
- 48: Verteiler
- 49: Verteiler
- 50: Wärmetauscher
- 51: Raum
- 52: Raum
- 53: Rohrsystem
- 54: Mantelstein
- 55: Mantelstein
- 56: Mantelstein
- 57: Mantelstein
- 58: Mantelstein
- 59: Mantelstein
- 60: Nutrinne
- 61: Federeinfügung
- 62: Kernkanal, horizontal
- 63: Kernkanal, horizontal
- 64: Kernkanal, horizontal
- 65: Dämmschicht
- 66: Dämmschicht
- 67: Dämmschicht
- 68: Rohr
- 69: Rohr
- 70: Rohr
- 71: Steg
- 72: Rohrsystem
- 73: Kernbereich
- 74: Regelungseinrichtung
- 75: Steg
- 76: Pumpen-/Mischergruppe
- 77: Pumpen-/Mischergruppe
- 78: Regler mit Pumpenlogik
- 79: Regelungseinrichtung
- 80: Regelungseinrichtung
- 81: Regelungseinrichtung
- 82: Regelungseinrichtung
- 83: Sensor
- 84: Sensor
- 85: Sensor
- 86: Sensor
- 87: Sensor
- 88: Sensor
- 89: Sensor
- 90: Sensor
- 91: Pumpe
- 92: Pumpe
- 93: Pumpe
- 94: Sensor
- 95: Sensor
- 96: Pumpe
- 97: Sensor
- 98: Sensor
- 99: Sensor
- 100: Regelungseinrichtung
- 101: Mischer
- 102: Regelungseinrichtung
- 103: Mischer
- 104: Steg
- 105: Steg
- 106: Einfüllkanal, vertikal
- 107: Einfüllkanal, vertikal
- 108: Betonfüllstand
- 109: Einfüllkanal, vertikal
- 110: Kaltwasserzufluß
- 111: Warmwasserabgang
- 112: Sensor
- 113: Sensor
- 114: Sensor
- 115: Vertikalrohr, gebogen

## Patentansprüche

1. Solarenergieversorgte Heiz- und Warmwasseranlage für Gebäude, enthaltend mindestens einen Solarkollektor (3,4) mit einem hydraulischen, die Solarenergie in Wärmetauscher transportierenden Solarverteiler (5), wobei der Solarkollektor (3,4), der Solarverteiler (5) und vorlauf- und rücklaufseitige Verteilerrohre (17,18) einen durchgängigen Flüssigkeitskreislauf bilden, einen daran angeschlossenen Kombispeicher (6) höchster Temperaturebene mit einem Warmwasserbereiter (7) und mit einer Fußboden-/Innenwandheizung (8,9) sowie mehrere im Gebäudebodenbereich befindliche, energieauf- und entladbare Anlagenspeicher (12,13,23) nachgestufter Temperaturebenen zum Eintrag, zur Speicherung und zum Austrag der Solarenergie, eine mit einem der Anlagenspeicher in Verbindung stehende Außenwandheizung (10,11), mindestens eine thermosensorengestützte Regelungsanlage (15) sowie eine zugeordnete Sicherheitstechnik (16), wobei die Regelungsanlage (15) mit den den Speichern (6,12,13,23) zugeordneten Verteilern (46,47,48,49) des Solarverteilers (5) signaltechnisch verbunden ist und ein rangvorgegebenes Zusammenspiel zwischen den Speichern (6,12,13,23) bezogen auf die bereitgestellte Solarenergie und die abgeforderte Speicherenergie durchführt, wodurch die jeweils den vorhergehenden Speicher (6,12,13) verlassende, in der Solarverteilerflüssigkeit verbleibende Solarenergie in mindestens einen der Anlagenspeicher (12,13,23) eintragbar ist,
**gekennzeichnet durch** folgende Merkmale:
a) der Kombispeicher (6) und die Anlagenspeicher (12,13,23) der nachgestuften Temperaturebenen sind über den jeweils eigenen Vor- und Rücklauf an den Solarverteiler (5) seriell hintereinander im rücklaufseitigen Verteilerrohr (18) eingeschaltet angeschlossen,
b) der Anlagenspeicher (12) mit der höchsten nachgestuften Temperaturebene ist über einen Wärmeaustausch wärmeaustragsseitig wahlweise indirekt mit dem Kombispeicher (6) und/oder mit der Fußboden-/Innenwandheizung (8,9) verbunden,
c) der Anlagenspeicher (23) mit der niedrigsten Temperaturebene ist über einen Wärmeaustausch wärmeaustragsseitig wahlweise direkt mit einer Wärmepumpe (14) verbunden, die den Kombispeicher (6) über einen Wärmeaustausch wärmeeintragend unterstützt,
d) der Anlagenspeicher (13) mit einer der mittleren Temperaturebenen ist über einen Wärmeaustausch wärmeaustragsseitig direkt mit der Außenwandheizung (10,11) verbunden,
e) die Außenwandheizung (10,11) ist innerhalb von gebäudetragenden Außenwänden enthalten, in deren Kernbereich (73) eine nach außen gerichtet wärmeisolierende, vertikale Dämmschicht (65,66,67), mindestens ein verlegtes, solarenergietransportierendes Rohrsystem (68,69,70;115) sowie rohrsystemumgebend verfüllter Beton vorhanden sind, und
f) die Regelungsanlage (15) ist mit den Pumpen-/Mischer-Baugruppen (76,77) der Heizungen (8,9,10,11) signaltechnisch derart verbunden, daß die jeweils einen Speicher (12,13) verlassende Solarenergie je nach Bedarf über den Wärmeaustausch wärmeaustragsseitig in den Kombispeicher (6) und/oder in die Heizungen (8,9,10,11) übertragbar ist.

2. Anlage nach Anspruch 1,
**dadurch gekennzeichnet,**
**daß** die temperaturebenennachgestuften Anlagenspeicher (12,13,23) unterirdisch angeordnet sind und vorzugsweise einen Bodenplattenspeicher (12) mit höherer Temperaturebene, einen gebäudezentralen Erdwärmespeicher (13) mit mittlerer Temperaturebene und einen gebäudeseitlichen Erdwärmespeicher (23) mit niedrigster Temperaturebene darstellen, wobei die Anlagenspeicher (12;13;23) als Kollektoren für die jeweils wärmeaustragsseitig angeschlossenen Heizungen (6,8,9;10,11;14,6) dienen.

3. Anlage nach Anspruch 1 und/oder 2,
**dadurch gekennzeichnet,**
**daß** die Vorlaufabzweigungen (19,20,21,22) der angeschlossenen Speicher (6,12,13,23) im Solarverteiler (5) gesteuerte Verteilerausgänge (24,25,26,27) aufweisen, die mit der Regelungsanlage (15) bzw. zugehörigen Regelungseinrichtungen (79,80,81,82) verbunden sind, die in einer vorgegebenen Rangfolge (6-12-13-23) die Verteilerausgänge (24,25,26,27) für die jeweils von Speicher zu Speicher (6-12,12-13,13-23) weniger Solarenergie enthaltende Flüssigkeitsströmung derart öffnen, daß vorlaufseitig eine ständige Anströmung der Solarkollektoren (3,4) mit der eine Temperatur zwischen 10 bis 30°C aufweisenden Flüssigkeit vorgesehen ist, wobei der Bodenplattenspeicher (12) wahlweise indirekt mit dem Kombispeicher (6) und/oder mit der Fußboden-/Innenwandheizung (8,9) sowie der gebäudezentrale Erdwärmespeicher (13) direkt mit der Außenwandheizung (10,11) zur Übergabe der in ihm gespeicherten Solarenergie verbunden sind und der gebäudeseitliche Erdwärmespeicher (23) direkt an die Wärmepumpe (14) angeschlossen ist, die die dort gespeicherte Solarenergie je nach Bedarf direkt in den Kombispeicher (6) führt, wobei bei indirekter Kopplung ein wärmeeintragender Frostschutzmittelflüssigkeitskreislauf (37) und ein davon getrennter wärmeaustragender Wasserkreislauf (38) vorhanden sind sowie bei direkter Kopplung der wärmeeintragende und wärmeaustragende Frostschutzmittelflüssigkeitskreislauf in einem Rohrsystem (72,53) enthalten ist.

4. Anlage nach mindestens einem der vorhergehenden Ansprüche,
**dadurch gekennzeichnet,**
**daß** den Bereichen vor den Verteilerausgängen (24,25,26,27) und den unmittelbaren Bereichen der Speicher (6,12,13,23) jeweils Temperaturmeßstellen mit Thermosensoren (83,84,85,86;87,88,89,90) zugeordnet sind, die die momentanen Rücklauf- bzw. Speichertemperaturen messen und zu deren signaltechnischen Weiterleitung mit den Regeleinrichtungen (79,80,81,82) bzw. der Regelungsanlage (15) verbunden sind, die die den jeweiligen Speichern (6,12,13,23) zuzuordnenden Temperaturdifferenzen derart auswerten, daß je nach Energieangebot die zugehörigen Verteilerausgänge, insbesondere Dreiwegeventile (24,25,26,27) im Solarverteiler (5) umschalten.

5. Anlage nach mindestens einem der vorhergehenden Ansprüche,
**dadurch gekennzeichnet,**
**daß** der Bodenplattenspeicher (12) wahlweise zwei hydraulisch getrennte Rohrsysteme (37,38) besitzt, die im Raster von vorzugsweise 100 mm verlegt sind, wobei das erste Rohrsystem (37) die Solarenergie in die Bodenplatte (31) einträgt und speichert, wobei das andere wahlweise vorgesehene Rohrsystem (38) gesteuert die gespeicherte Wärme austrägt und wobei die Bodenplatte (31) vorzugsweise mit einer nach oben zum Gebäude (2) gerichteten wärmeisolierenden Dämmschicht (32) ausgebildet ist.

6. Anlage nach mindestens einem der vorhergehenden Ansprüche,
**dadurch gekennzeichnet,**
**daß** der Bodenplattenspeicher (12) mit einem Verteiler (47) und dem wärmeeintragenden Rohrsystem (37) an dem Solarverteiler (5) angeschlossen ist und wahlweise mit dem anderen wärmeaustragenden Rohrsystem (38) mit dem Kombispeicher (6) und/oder der Fußboden-/Innenwandheizung (8,9) in genannter Reihe kreislaufartig verbunden ist.

7. Anlage nach mindestens einem der vorhergehenden Ansprüche,
**dadurch gekennzeichnet,**
**daß** der Solarkollektor (3,4) vorzugsweise als Großflächenkollektor ausgebildet ist, der so optimal wie möglich nach Süden ausgerichtet und dessen Kollektorneigung, z.B. bei einem Winkel von größer als 45°, insbesondere dem Winterstand der Sonne angepaßt ist.

8. Anlage nach mindestens einem der vorhergehenden Ansprüche,
**dadurch gekennzeichnet,**
**daß** die Speicher (6,12,13,23) mit dem jeweils speicherzugehörigen Vorlauf und Rücklauf in dem rücklaufsseitigen Verteilerrohr (18) des Solarverteilers (5) hintereinander derart angeordnet eingeschaltet sind, daß nach beendetem Energieeintrag die Solarkollektoren (3,4) vorlaufseitig ständig relativ kalt anströmbar und vorzugsweise mit einer maximalen Betriebstemperatur von zwischen 50 bis 65°C betreibbar sind.

9. Anlage nach mindestens einem der vorhergehenden Ansprüche,
**dadurch gekennzeichnet,**
**daß** die Solarkollektoren (3,4) mindestens eine Pumpenbaugruppe (29) besitzen, die mit ihrer Sicherheitseinrichtung (16) die Solarkollektoren (3,4) auf einen inneren Druck von 6,0 bar absichert, wobei vorzugsweise die Pumpenbaugruppe (29) in das Rücklaufverteilerrohr (18) eingebunden ist.

10. Anlage nach mindestens einem der vorhergehenden Ansprüche,
**dadurch gekennzeichnet,**
**daß** der Kombispeicher (6) vorzugsweise als ein Pufferspeicher herkömmlicher Bauart mit mindestens einem innen liegenden fremderhitzbaren Warmwasserbereiter (7) ausgebildet ist und mit der Fußboden-/Innenwandheizung (8,9) in Verbindung steht, wobei durch den Eintrag von Solarenergie in den Kombispeicher (6) Brauchwasser im Warmwasserbereiter (7) erwärmbar und die Solarenergie in die angeschlossene Fußboden-/Innenwandheizung (8,9) weiterleitbar ist.

11. Anlage nach mindestens einem der vorhergehenden Ansprüche,
**dadurch gekennzeichnet,**
**daß** gemeinsam mit der Wärmepumpe (14) oder anstelle der Wärmepumpe (14) an den Kombispeicher (6) zum Nachheizen eine beliebige andere Wärmequelle, insbesondere ein Elektroheizstab mit Nachtstrom oder eine Gasbrennwerttherme angeschlossen ist.

12. Anlage nach mindestens einem der vorhergehenden Ansprüche,
**dadurch gekennzeichnet,**
**daß** der gebäudezentrale Erdwärmespeicher (13) sich unmittelbar unter der Bodenplatte (31) befindet und dem Bodenplattenspeicher (12) als wärmeaufnehmende Dämmschicht nach unten dient.

13. Anlage nach mindestens einem der vorhergehenden Ansprüche,
**dadurch gekennzeichnet,**
**daß** das im gebäudezentralen Erdwärmespeicher (13) befindliche Rohrsystem (72) im Raster von vorzugsweise 100 mm verlegt und auf eine Regelungseinrichtung (81) aufgeschaltet ist, wobei sich die Temperaturen im Erdwärmespeicher (13) vorzugsweise auf eine mittlere Temperaturebene zwischen 20 bis 40°C einstellen.

14. Anlage nach mindestens einem der vorhergehenden Ansprüche,
**dadurch gekennzeichnet,**
**daß** der gebäudeseitliche Erdwärmespeicher (23) vorzugsweise horizontal und vertikal aufgebaut ist und aus einem gleichmäßig flach im Raster verlegten PE-Rohrsystem (53) besteht, wobei die vertikalen Bohrungen vorzugsweise bis zu 2,5 m tief und mit gleich ausgebildetem verlegtem Rohr vorzugsweise im Tauchsiederprinzip bestückt sind.

15. Anlage nach mindestens einem der vorhergehenden Ansprüche,
**dadurch gekennzeichnet,**
**daß** der gebäudeseitliche Erdwärmespeicher (23) der Sole-Wärmepumpe (14) als Erdkollektor dient und auf Grund der Anbindung an den hydraulischen Solarverteiler (5) und der anfallenden Wärmeverluste des gebäudezentralen Erdwärmespeichers (13) ständig auf der niedrigsten Temperaturebene vorzugsweise zwischen 10 bis 20°C mittels der Regelungseinrichtung (82) einstellbar ist.

16. Anlage nach mindestens einem der vorhergehenden Ansprüche,
**dadurch gekennzeichnet,**
**daß** die Ausbildung von Größe und Leistung der Sole-Wärmepumpe (14) vom Wärmebedarf des Gebäudes (2) derart abhängig ist, daß die Wärmepumpe (14) bei Havarie im Bereich der Solarkollektoren (3,4) maximal den gesamten Wärmebedarf des Gebäudes(2) leistet.

17. Anlage nach mindestens einem der vorhergehenden Ansprüche,
**dadurch gekennzeichnet,**
**daß** die Sole-Wärmepumpe (14) im wesentlichen die Verdichteranlage mit den geräteinternen Wärmetauschern, eine Sole- und eine Heizungspumpe (91,92), Sicherheitsbauteile und eine Regelungseinrichtung (74) umfaßt sowie über das wärmetauschende Rohrsystem (53) wärmeaustragsseitig mit dem gebäudeseitlichen Erdwärmespeicher (23) verbunden ist.

18. Anlage nach mindestens einem der vorhergehenden Ansprüche,
**dadurch gekennzeichnet,**
**daß** die Fußboden-/Innenwandheizung (8,9) mit einer Vorlauftemperatur von vorzugsweise 35° C arbeitet, sich hydraulisch direkt aus dem angeschlossenen Kombispeicher (6) versorgt und wahlweise rücklaufseitig durch das Rohrsystem (38) des Bodenplattenspeichers (12) führt.

19. Anlage nach mindestens einem der vorhergehenden Ansprüche,
**dadurch gekennzeichnet,**
**daß** den Außenwandheizungen (10,11) mindestens eine Pumpen/Mischer-Baugruppe (96,76) zugeordnet ist, mit der unter Einsatz einer Regelungseinrichtung (102), des Mischers (103) und der Sensoren (97,98) eine vorzugsweise konstante in die Innenräume (51,52) gerichtete Temperatur einstellbar ist.

20. Anlage nach mindestens einem der vorhergehenden Ansprüche,
**dadurch gekennzeichnet,**
**daß** die Außenwandheizung (10,11) vorzugsweise mit Mantelsteinen (54 bis 59) aufgebaut ist, die derart übereinander verrastet sind, daß steinbenachbarte, mantelinnere horizontale und vertikale Kern-/Einfüllkanäle (62,63, 64;106,107,109) zur Rohrsystemverlegung und Betonverfüllung ausgebildet sind.

21. Anlage nach mindestens einem der vorhergehenden Ansprüche,
**dadurch gekennzeichnet,**
**daß** die zur Außenwandheizung (10,11) gehörenden Mantelsteine (54,55,56,57,58,59) im Längs- und im Querschnitt vorzugsweise H-, doppel-H- oder mehrfach-H-förmig ausgebildet sind.

22. Anlage nach Anspruch 21,
**dadurch gekennzeichnet,**
**daß** die nach außen gerichteten schalenden Außenmäntel der Mantelsteine (54,55,56,57,58,59) mit der im Kernbereich (73) befindlichen wärmeisolierenden Dämmschicht (67,65,66) versehen sind, wobei die den Außen- und Innenmantel verbindenden H-Stege (71,75) vorzugsweise vollkommen oder teilweise umgeben aus Dämmaterial bestehen.

23. Anlage nach mindestens einem der vorhergehenden Ansprüche
**dadurch gekennzeichnet,**
**daß** die Ausbildung des Ausdehnungsgefäßes (30) des Solarverteilers (5) von der maximalem Betriebstemperatur, der Stillstandstemperatur, den jeweilig zugehörigen Frostschutzmittelflüssigkeitsmengen und den Parametern der Sicherheitseinrichtung (16) abhängig ist.

24. Anlage nach mindestens einem der vorhergehenden Ansprüche,
**dadurch gekennzeichnet,**
**daß** in der Regelungsanlage (15) vorzugsweise alle elektrotechnischen und elektronischen Regelungselemente zusammengefaßt untergebracht sind, die folgende Vorgänge vorzugsweise programmtechnisch schalten:
1. Einschalten der Sole-Wärmepumpe (14) mit den zugehörigen Betriebspumpen (91,92) zur Versorgung der Wärmepumpe (14) mit Soleflüssigkeit und Heizungflüssigkeit.
2. Einschalten der Umwälzpumpe (93) für die Fußbodenheizung (8) und/oder Innenwandheizung (9) und Ausregeln des Mischers (101) nach der Vorlauftemperatur am Sensor (94), der Außentemperatur am Sensor (95) und einer Regelkurve.
3. Einschalten der Umwälzpumpe (96) für die Außenwandheizungen (10,11) innerhalb der Außenwände (35,36) nach der Außentemperatur am Sensor (97) und Ausregeln des Mischers (103) nach der Solltemperatur, der Vorlauftemperatur am Sensor (98) und einer Regelkurve.
4. Einschalten der Umwälzpumpe (29) des Solarverteilers (5) bei Erreichen einer Differenztemperatur zwischen der Temperatur am Sensor (99) in den Rücklaufsbereichen des Solarkollektors (3,4) und der Temperatur am Sensor (90) des gebäudeseitlichen Erdwärmespeichers (23).
5. Zuschalten der notwendigen Betriebspumpen der Sole-Wärmepumpe (14) bei Wärmebedarf des Kombispeichers (6).
6. Einschalten der Umwälzpumpe (92) für die Zirkulation des Brauchwassers entsprechend der Zeit.
7. Verarbeitung von vorzugsweise fünf Differenztemperaturen mit Einstellung einer Solltemperatur, einer MIN- und MAX-Temperatur und einer Sollwertabweichung und
8. Verarbeitung und Anzeige von mindestens einem Wärmemengenzähler (40).

25. Anlage nach mindestens einem der vorhergehenden Ansprüche,
**dadurch gekennzeichnet,**
**daß** die Regelungsanlage (15) bzw. die Regelungseinrichtungen (79,80,81,82;74) in einem entsprechenden Schaltschrank bzw. einem Gehäuse untergebracht sowie neben der Sole-Wärmepumpe (14) und dem vorzugsweise gehäuseumgebenen, kompakt ausgebildeten, hydraulischen Solarverteiler (5) montiert sind.

## Claims

1. A solar heating and hot water installation for buildings, comprising at least one solar collector (3,4) with a hydraulic solar distributor system (5) carrying the solar energy to heat exchangers, wherein the solar collector (3,4), the solar distributor system (5) and distributing pipes on the feed and return side (17,18) form a continuous fluid circulation system, a combined storage (6) at the highest temperature level connected thereto with a water heater (7) and a floor/internal wall heating (8,9) as well as several installation storages (12,13,23) that may be charged with and discharge energy at lower temperature levels located in the floor area of the building for solar energy input, storage and output, an external wall heating (10,11) connected to one of the installation storages, at least one thermosensor-based control system (15) as well as an associated safety system (16) wherein the control system (15) is connected to the distributor devices (46,47,48,49) of the solar distributor system (5) pertaining to the storages (6,12,13,23) via a signalling system, performing interaction between said storages (6,12,13,23) in a preset order of precedence, with regard to the solar energy provided and the stored energy required, whereby the solar energy respectively leaving the previous storage (6,12,13), remaining in the fluid of the solar distributor system may be supplied to at least one of the installation storages (12,13,23),
**characterised by** the following features:
a) the combined storage (6) and the installation storages (12,13,23) at the lower temperature levels are connected to the solar distributor system (5) in series in the distributing pipe (18) on the return side via the feed and return lines each of them is provided with,
b) the installation storage (12) at the highest of the lower temperature levels is in an indirect way selectively connected to the combined storage(6) and/or the floor/internal wall heating (8,9) on the heat discharge side by means of a heat exchange,
c) the installation storage (23) at the lowest temperature level is in a direct way selectively connected to a heat pump (14) on the heat discharge side by means of a heat exchange, whereby said heat pump (14) supports the combined storage (6) with the supply of heat by means of a heat exchange,
d) the installation storage (13) at one of the medium temperature levels is in a direct way connected to the external wall heating (10,11) on the heat discharge side by means of a heat exchange,
e) the external wall heating (10,11) is provided within load-bearing external walls, the central section (73) of which contains a vertical heat-insulating layer (65,66; 67) that insulates from external effects, at least one piping system installed to carry solar energy (68,69,70; 115) as well as concrete the cavities around the pipework are filled with, and
f) the control system (15) is connected to the pump/mixer subassemblies (76,77) of the heating installations (8,9, 10,11) via a signalling system operating in such manner that the solar energy respectively leaving one storage (12,13) may be transferred to the combined storage (6) and/or the heating installations (8,9,10,11) on demand on the heat discharge side by means of the heat exchange.

2. An installation according to claim 1,
**characterised in that**
the installation storages (12,13,23) at the lower temperature levels are arranged beneath the ground and are preferably designed as a floor plate storage (12) at a higher temperature level, an underground energy store (13) located in a central position with respect to the building at a medium temperature level and an underground energy store (23) located at the side of the building at the lowest temperature level, wherein the installation storages (12;13;23) serve as collectors for the heating installations (6,8,9;10,11; 14,6) respectively connected on the heat discharge side.

3. An installation according to claim 1 and/or 2,
**characterised in that**
the feed line branches (19,20,21,22) of the storages (6,12,13,23) connected are provided with controlled distributor outlets (24,25,26,27) in the solar distributor system (5) that are connected to the control system (15) or the associated control devices (79,80,81,82) which, in a preset order of precedence (6-12-13-23), open the distributor outlets (24,25,26, 27) for the fluid containing less solar energy in each of the storages it flows through (6-12,12-13,13-23), in such manner that on the feed side, the fluid whose temperature is between 10 and 30°C shall continuously flow to the solar collectors (3,4), wherein the floor plate storage (12) is in an indirect way selectively connected to the combined storage (6) and/or the floor/internal wall heating (8,9) and the underground energy store (13) located in a central position with respect to the building is in a direct way connected to the external wall heating (10,11) to transfer the solar energy stored in it, and the underground energy store (23) located at the side of the building is in a direct way connected to the heat pump (14) transferring the solar energy stored therein direct to the combined storage (6) on demand, wherein with the indirect connection a heat supplying antifreeze fluid circulation (37) and a separate heat discharging water circulation (38) take place, and with the direct connection the heat supplying and heat discharging antifreeze fluid circulates in a piping system (72,53).

4. An installation according to at least one of the preceding claims,
**characterised in that**
to each of the areas located in front of the distributor outlets (24,25,26,27) and the direct areas of the storage (6,12,13,23) thermosensors (83,84,85,86; 87,88,89,90) are pertaining that measure the instantaneous return or storage temperatures and are connected to the control devices (79,80,81,82) or the control system (15) in order, to transfer the temperatures measured via the signalling system, wherein the temperature differences to be allocated to the respective storages (6,12,13,23) are evaluated by said control devices (79,80,81,82) or said control system (15) in such manner that the associated distributor outlets, being three-way valves (24,25,26, 27) in particular, in the solar distributor system (5) change over according to the energy available.

5. An installation according to at least one of the preceding claims,
**characterised in that**
the floor plate storage (12) selectively has two piping systems (37,38) that are hydraulically separated from one another and are installed in a grid pattern of preferably 100 mm, wherein the solar energy is supplied to the floor plate (31) and stored therein via the first piping system (37), wherein the other piping system that is selectively provided (38) serves to discharge the stored heat in a controlled manner, and wherein it is preferred that the floor plate (31) is constructed using a heat-insulating layer (32) installed on it that is directed towards the building (2).

6. An installation according to at least one of the preceding claims,
**characterised in that**
the floor plate storage (12) is connected to the solar distributor system (5) with a distributor device (47) and the heat supplying piping system (37), and is, with the other heat discharging piping system (38), selectively connected to the combined storage (6) and/or the floor/internal wall heating (8,9) in said order, forming a kind of a circuit.

7. An installation according to at least one of the preceding claims,
**characterised in that**
the solar collector (3,4) preferably takes the form of a large-surface collector with optimum southward orientation, whose inclination, e. g. at an angle greater than 45°, will be adapted in particular to the position of the sun in winter.

8. An installation according to at least one of the preceding claims,
**characterised in that**
the storages (6,12,13,23) with the feed and return lines pertaining to each of them are series connected in the distributing pipe on the return side (18) of the solar distributor system (5) in such manner that after the energy input has been completed, the solar collectors (3,4) may continuously be flowed at a relatively low temperature on the feed side and may preferably be operated at a maximum operating temperature between 50 and 65° C.

9. An installation according to at least one of the preceding claims,
**characterised in that**
the solar collectors (3,4) have at least one pumping set (29), securing the solar collectors (3,4) to an internal pressure of 6,0 bar by means of its safety system (16), wherein it is preferred that the pumping set (29) is integrated into the distributing pipe (18) on the return side.

10. An installation according to at least one of the preceding claims,
**characterised in that**
the combined storage (6) is preferably designed as a conventional buffer storage with at least one internal water heater (7) that may be heated separately, and that said storage (6) is connected to the floor/internal wall heating (8,9), wherein the solar energy supplied to the combined storage (6) may be used to heat service water in the water heater (7) and may be transferred to the floor/internal wall heating (8,9) connected.

11. An installation according to at least one of the preceding claims,
**characterised in that**
together with the heat pump (14) or in lieu of the heat pump (14) any other source of heat is connected to the combined storage (6) for additional heating, such heat source being in particular a heating rod working with nighttime-produced electricity or a gas-fired condensing boiler.

12. An installation according to at least one of the preceding claims,
**characterised in that**
the underground energy store (13) located in a central position with respect to the building is located directly beneath the floor plate (31) serving the floor plate storage (12) as a heat absorbing layer that insulates from the ground.

13. An installation according to at least one of the preceding claims,
**characterised in that**
the piping system (72) contained in the underground energy store (13) located in a central position with respect to the building is installed in a grid pattern of preferably 100 mm and connected to a control unit (81), wherein the temperatures in the underground energy store (13) preferably adjust to a medium temperature level between 20 and 40° C.

14. An installation according to at least one of the preceding claims,
**characterised in that**
the underground energy store (23) located at the side of the building is preferably constructed in a horizontal and vertical direction and consists of a piping system (53) made of polyethylene evenly laid in flat formation in a grid pattern, wherein the vertical bore holes preferably have a depth of up to 2.5 metres and are equipped with similarly constructed pipework preferably installed in spiral form.

15. An installation according to at least one of the preceding claims,
**characterised in that**
the underground energy store (23) located at the side of the building is used as an underground collector for the brine circulation heat pump (14) and is, due to being connected to the hydraulic solar distributor system (5) and the heat losses in the underground energy store (13) located in a central position with respect to the building, continuously adjustable at the lowest temperature level via the control unit (82), wherein the temperatures are preferably adjustable between 10 and 20° C.

16. An installation according to at least one of the preceding claims,
**characterised in that**
size and capacity of the brine circulation heat pump (14) need to be designed considering the heat consumption of the building (2) in such manner that in case the solar collectors (3,4) fail, the heat pump (14) shall provide a maximum of 100 per cent of the heat the building (2) consumes.

17. An installation according to at least one of the preceding claims,
**characterised in that**
the brine circulation heat pump (14) mainly comprises the compressor unit with the local mode heat exchangers, a brine circulation and a heating pump (91, 92), safety components and a control unit (74) and is connected to the underground energy store (23) located at the side of the building on the heat discharge side via the heat exchanging piping system (53).

18. An installation according to at least one of the preceding claims,
**characterised in that**
the flow temperature of the floor/internal wall heating (8,9) preferably is 35°C, **in that** the water for said heating (8,9) is directly supplied from the combined storage (6) connected thereto and **in that** said heating (8,9) selectively passes through the piping system (38) of the floor plate storage (12) on the return side.

19. An installation according to at least one of the preceding claims,
**characterised in that**
at least one pump/mixer subassembly (96,76) is associated with the external wall heating installations (10,11) with which a preferably constant temperature directed towards the indoor rooms (51,52) may be adjusted using a control unit (102), the mixer (103) and the sensors (97,98).

20. An installation according to at least one of the preceding claims,
**characterised in that**
the external wall heating (10,11) is preferably constructed by means of form elements (54 to 59) fitted together one upon the other in such manner that horizontal and vertical core/filling channels (62,63,64;106,107,109) adjacent to the elements are formed in the inner spaces to install pipework and to be filled with concrete.

21. An installation according to at least one of the preceding claims,
**characterised in that**
the cross and longitudinal sections of the form elements (54,55,56,57,58,59) pertaining to the external wall heating (10,11) are preferably constructed as H sections, double H sections or multiple H sections.

22. An installation according to claim 21,
**characterised in that**
the outer shells of the form elements (54,55,56,57,58, 59) directed towards the outside are provided with a heat-insulating layer (67,65,66) located in the core section (73), wherein it is preferred that the H-shaped webs (71,75) linking the outer and inner shell are completely made of or partly covered with insulating material.

23. An installation according to at least one of the preceding claims,
**characterised in that**
the design of the expansion tank (30) of the solar distributor system (5) depends on the maximum operating temperature, the stop period temperature, the quantities of antifreeze fluid respectively pertaining. thereto and the characteristics of the safety system (16).

24. An installation according to at least one of the preceding claims,
**characterised in that**
it is preferred that in the control system (15) all electrotechnical and electronic control elements are housed in combination, controlling the following processes preferably by means of programmes:
1. Connecting the brine circulation heat pump (14) with the associated service pumps (91,92) to supply brine and heating fluid to the heat pump (14).
2. Connecting the circulation pump (93) for the floor heating (8) and/or the internal wall heating (9) and adjusting the mixing device (101) according to the flow temperature at the sensor (94), the outside temperature at the sensor (95) and a control characteristic.
3. Connecting the circulation pump (96) for the external wall heating installations (10,11) contained in the external walls (35,36) according to the outside temperature at the sensor (97) and adjusting the mixer (103) according to the desired temperature, the flow temperature at the sensor (98) and a control characteristic.
4. Connecting the circulation pump (29) of the solar distributor system (5) when the temperature at the sensor (99) in the return areas of the solar collector (3,4) differs from the temperature at the sensor (90) of the underground energy store (23) located at the side of the building.
5. Connecting the required service pumps pertaining to the brine circulation heat pump (14) if heat needs to be supplied to the combined storage (6).
6. Connecting the circulation pump (92) to circulate the service water according to the time set.
7. Processing of preferably five differential temperatures setting a desired temperature, a minimum and a maximum temperature and a desired value deviation, and
8. Processing and display by at least one calorimeter (40).

25. An installation according to at least one of the preceding claims,
**characterised in that**
the control system (15) or the control devices (79,80,81,82;74) are housed in an appropriate control cabinet or housing and are installed beside the brine circulation heat pump (14) and the hydraulic solar distributor system (5) that is preferably enclosed with a housing and of a compact design.

## Revendications

1. Installation de chauffage et d'eau chaude pour bâtiments, comprenant au moins un collecteur solaire (3,4) avec un dispositif de distribution solaire (5) hydraulique acheminant l'énergie solaire dans des échangeurs de chaleur, étant entendu que le collecteur solaire (3,4), le dispositif de distribution solaire (5) et les conduites d'aller et de retour (17,18) du dispositif de distribution forment un cycle de fluide interconnecté, un accumulateur combiné (6) du niveau de température le plus élevé lui étant raccordé, avec un chauffe-eau (7) et avec un chauffage au sol et un chauffage mural intérieur (8,9), de même qu'une pluralité d'accumulateurs (12,13,23) disposés à la base du bâtiment, pouvant être chargés en énergie ou déchargés de l'énergie et ayant différents niveaux de température échelonnés, lesdits accumulateurs servant à l'admission de l'énergie solaire, à son accumulation et à sa restitution, un chauffage mural extérieur (10,11), raccordé à l'un des accumulateurs de l'installation, au moins un dispositif de réglage (15), assisté de détecteurs thermiques, de même qu'un dispositif de sûreté associé (16), étant entendu que le dispositif de réglage (15) est relié par un système de signalisation aux distributeurs (46,47,48,49) du dispositif de distribution solaire (5) associés aux accumulateurs (6,12,13,23), ledit dispositif de réglage assurant une coordination dans un ordre donné des accumulateurs (6,12,13,23), en rapport avec l'énergie solaire disponible et l'énergie accumulée exigée, sachant que l'énergie solaire qui sort de chacun des accumulateurs précédents (6,12,13) et reste dans le fluide du dispositif de distribution solaire peut être admise par au moins l'un des accumulateurs de l'installation (12,13,23),
présentant les caractéristiques suivantes :
a) l'accumulateur combiné (6) et les accumulateurs de l'installation (12,13,23) de différents niveaux de température échelonnés sont, au niveau du retour de la conduite de distribution (18), montés en série, dans un ordre donné, au dispositif de distribution solaire (5) chacun par l'intermédiaire de sa propre conduite d'aller et de retour,
b) l'accumulateur de l'installation (12) ayant le niveau de température le plus élevé est relié côté restitution de la chaleur au choix indirectement à l'accumulateur combiné (6) et/ou au chauffage au sol/chauffage mural intérieur (8,9) par un échange thermique,
c) l'accumulateur de l'installation (23) ayant le plus faible niveau de température est relié côté restitution de la chaleur au choix directement à une pompe de chaleur (14), laquelle assiste l'accumulateur combiné (6) par un échange thermique admettant la chaleur,
d) l'accumulateur de l'installation (13) avec l'un des niveaux de température moyens est relié côté restitution de la chaleur directement au chauffage mural extérieur (10,11) par un échange thermique,
e) le chauffage mural extérieur (10,11) est installé dans les murs extérieurs portants du bâtiment, au centre (73) desquels se trouvent une couche d'isolation calorifuge verticale (65,66;67) dirigée vers l'extérieur, au moins un système de conduites installé, acheminant l'énergie solaire (68,69,70;115), de même que du béton moulé enveloppant le système de conduites, et
f) le dispositif de réglage (15) est relié par un système de signalisation aux dispositifs de pompes/mélangeurs (76,77) des chauffages (8,9,10,11), de telle manière que l'énergie solaire sortant de chacun des accumulateurs (12,13) peut être, selon les besoins, transmise, par un échange thermique côté restitution de la chaleur, dans l'accumulateur combiné (6) et/ou dans les chauffages (8,9,10,11).

2. Installation suivant la revendication 1,
**caractérisée en ce que**,
les accumulateurs de l'installation ayant différents niveaux de températures échelonnés (12,13,23) sont mis sous terre et représentent de préférence un accumulateur dans la dalle de plancher (12) avec un niveau de température plus élevé, un accumulateur thermique de terre (13) situé dans la partie centrale du bâtiment, avec un niveau de température moyen, et un accumulateur thermique de terre (23) situé dans la partie latérale du bâtiment, avec le plus faible niveau de température, étant entendu que les accumulateurs de l'installation (12;13;23) servent de collecteurs pour chacun des chauffages montés côté restitution de la chaleur (6,8,9;10,11;14,6).

3. Installation suivant la revendication 1 et/ou 2,
**caractérisée en ce que**,
les branchements d'aller (19,20,21,22) des accumulateurs raccordés (6,12,13,23) présentent dans le dispositif de distribution solaire (5) des sorties de distributeurs commandées (24,25,26,27), reliées au dispositif de réglage (15), voire aux systèmes régulateurs (79,80,81, 82) en faisant partie, lesquels, dans un ordre donné (6-12-13-23), ouvrent les sorties des distributeurs (24,25,26,27) pour l'écoulement du fluide moins chargé d'énergie solaire d'un accumulateur à un autre (6-12, 12-13,13-23) de telle manière que, dans la conduite d'aller, les collecteurs solaires (3,4) soient alimentés en permanence avec un fluide ayant une température située entre 10 et 30°C, étant entendu que l'accumulateur dans la dalle de plancher (12) peut être relié au choix indirectement à l'accumulateur combiné (6) et/ou au chauffage au sol/chauffage mural intérieur (8,9), de même que l'accumulateur thermique de terre (13) situé dans la partie centrale du bâtiment peut être relié directement au chauffage mural extérieur (10,11) afin de restituer l'énergie solaire qu'il a accumulée, et l'accumulateur thermique de terre situé dans la partie latérale du bâtiment (23) est monté directement à la pompe de chaleur (14), laquelle amène directement, selon les besoins, l'énergie solaire y étant accumulée à l'accumulateur combiné (6), étant entendu que, lors d'un couplage indirect, on a un cycle de liquide antigel admettant la chaleur (37) et un cycle hydrologique (38) séparé restituant la chaleur, de même que, lors d'un couplage direct, le cycle de liquide antigel admettant la chaleur et restituant la chaleur est disposé dans un système de conduites (72,53).

4. Installation suivant au moins l'une des revendications précédentes,
**caractérisée en ce que**,
des postes de mesure de la température équipés de détecteurs thermiques (83,84,85,86;87,88,89,90) sont associés aux zones avant les sorties des distributeurs (24,25,26,27) et aux zones contiguës aux accumulateurs (6,12,13,23), les détecteurs thermiques mesurant les températures momentanées de sortie, voire d'accumulation, et étant reliés aux systèmes régulateurs (79,80,81,82), voire au dispositif de réglage (15) dans le but de leur transmission par signaux, sachant que les systèmes régulateurs et le dispositif de réglage évaluent les écarts de température devant être attribués à chacun des accumulateurs (6,12,13,23) de telle manière que, selon la disponibilité en énergie, les sorties correspondantes du dispositif de distribution, notamment les vannes à trois voies (24,25,26,27) du dispositif de distribution solaire (5), opèrent une commutation.

5. Installation suivant au moins l'une des revendications précédentes,
**caractérisée en ce que**,
l'accumulateur dans la dalle de plancher (12) comporte au choix deux systèmes de conduites hydrauliques (37,38) séparés, lesquels sont posés selon une trame de 100 mm de préférence, étant entendu que le premier système de conduites (37) admet et accumule l'énergie solaire dans la dalle de plancher (31), étant entendu que l'autre système de conduites (38) prévu au choix assure la restitution régulée de la chaleur accumulée et étant entendu que la dalle de plancher (31) comporte de préférence une couche isolante calorifuge (32) dirigée vers le haut du bâtiment (2).

6. Installation suivant au moins l'une des revendications précédentes,
**caractérisée en ce que**,
l'accumulateur dans la dalle de plancher (12) avec un distributeur (47) est raccordé au dispositif de distribution solaire (5) par le système de conduites admettant la chaleur (37) et est au choix relié en circuit dans un ordre défini à l'accumulateur combiné (6) et/ou au chauffage au sol/chauffage mural intérieur (8,9) par l'autre système de conduites (38) restituant la chaleur.

7. Installation suivant au moins l'une des revendications précédentes,
**caractérisée en ce que**,
le collecteur solaire (3,4) se présente de préférence sous forme de collecteur à grande surface orienté d'une façon aussi optimale que possible vers le sud et dont l'inclinaison, par exemple pour un angle supérieur à 45°, est adaptée notamment à la position hivernale du soleil.

8. Installation suivant au moins l'une des revendications précédentes,
**caractérisée en ce que**,
au niveau de la conduite de retour (18) du dispositif de distribution solaire (5), les accumulateurs (6,12,13,23) sont montés en série avec l'aller et le retour des différents accumulateurs dans un ordre tel qu'une fois l'admission de l'énergie arrivée à terme, les collecteurs solaires (3,4) sont alimentés en permanence par l'aller, à une température relativement basse, et peuvent fonctionner de préférence à une température de service maximale située entre 50 et 65°C.

9. Installation suivant au moins l'une des revendications précédentes,
**caractérisée en ce que**,
les collecteurs solaires (3,4) possèdent au moins un dispositif de pompes (29) dont le dispositif de sûreté (16) garantit aux collecteurs solaires (3,4) une pression interne de 6,0 bars, le dispositif de pompes (29) étant de préférence inséré dans la conduite de retour (18) du dispositif de distribution.

10. Installation suivant au moins l'une des revendications précédentes,
**caractérisée en ce que**,
l'accumulateur combiné (6) forme de préférence un accumulateur tampon traditionnel avec au moins un chauffe-eau (7) disposé à l'intérieur, pouvant être chauffé extérieurement, et relié au chauffage au sol/chauffage mural intérieur (8,9), étant entendu que, grâce à l'admission de l'énergie solaire dans l'accumulateur combiné (6), on peut chauffer de l'eau industrielle dans le chauffe-eau (7) et acheminer l'énergie solaire dans le chauffage au sol/chauffage mural intérieur (8,9) raccordé.

11. Installation suivant au moins l'une des revendications précédentes,
**caractérisée en ce que**,
pour chauffer ultérieurement, n'importe quelle autre source de chaleur, notamment une cartouche chauffante électrique avec courant de nuit ou bien un chauffe-eau au gaz à pouvoir calorifique sont branchés à l'accumulateur combiné (6) avec la pompe de chaleur (14) ou à la place de la pompe de chaleur (14).

12. Installation suivant au moins l'une des revendications précédentes,
**caractérisée en ce que**,
l'accumulateur thermique de terre (13) situé dans la partie centrale du bâtiment se trouve directement sous la dalle de plancher (31) et sert de couche isolante calorifuge vers le bas à l'accumulateur dans la dalle de plancher (12).

13. Installation suivant au moins l'une des revendications précédentes,
**caractérisée en ce que**,
le système de conduites (72) situé dans l'accumulateur thermique de terre (13) disposé dans la partie centrale du bâtiment est posé selon une trame de 100 mm de préférence et est relié à un dispositif de réglage (81), étant entendu que les températures de l'accumulateur thermique de terre (13) sont réglables de préférence à un niveau moyen allant de 20 à 40°C.

14. Installation suivant au moins l'une des revendications précédentes,
**caractérisée en ce que**,
l'accumulateur thermique de terre (23) disposé dans la partie latérale du bâtiment est monté de préférence horizontalement ou verticalement et se compose d'un système de conduites en polyéthylène (53) disposé de manière régulière et à plat selon une trame, les perçages verticaux ayant de préférence une profondeur allant jusqu'à 2,5 m et étant équipés d'une conduite de même matière posée, de préférence selon le principe de thermoplongeur.

15. Installation suivant au moins l'une des revendications précédentes,
**caractérisée en ce que**,
l'accumulateur thermique de terre (23) de la pompe thermique de saumure (14) disposé dans la partie latérale du bâtiment sert de collecteur de terre et, étant donné qu'il est relié au distributeur solaire hydraulique (5) et du fait de la perte de chaleur qui a lieu au niveau de l'accumulateur thermique de terre (13) disposé au centre du bâtiment, est réglable en permanence, à l'aide du dispositif de réglage (82), au niveau de température le plus faible, soit de préférence entre 10 et 20°C.

16. Installation suivant au moins l'une des revendications précédentes,
**caractérisée en ce que**,
les dimensions et la puissance de la pompe thermique de saumure (14) dépendent à ce point du besoin en chaleur du bâtiment (2) qu'en cas d'avarie au niveau des collecteurs solaires (3,4), la pompe de chaleur (14) répond au besoin maximum global en chaleur du bâtiment (2).

17. Installation suivant au moins l'une des revendications précédentes,
**caractérisée en ce que**,
la pompe thermique de saumure (14) comprend essentiellement le dispositif de condensateurs avec les échangeurs thermiques intégrés, une pompe thermique de saumure et de chauffage (91,92), des organes de sécurité et un dispositif de réglage (74), et est reliée côté restitution de la chaleur à l'accumulateur thermique de terre (23) disposé dans la partie latérale du bâtiment par l'intermédiaire du système de conduites échangeant la chaleur (53).

18. Installation suivant au moins l'une des revendications précédentes,
**caractérisée en ce que**,
le chauffage au sol/chauffage mural intérieur (8,9) fonctionne à une température aller de 35°C de préférence, s'alimente en eau directement à l'accumulateur combiné (6) raccordé et passe au choix côté retour par le système de conduites (38) de l'accumulateur disposé dans la dalle de plancher (12).

19. Installation suivant au moins l'une des revendications précédentes,
**caractérisée en ce que**,
aux chauffages muraux extérieurs (10,11) est associé au moins un groupe de pompes/mélangeurs (96,76) grâce auquel on peut régler, à l'aide du dispositif de réglage (102), du mélangeur (103) et des détecteurs (97,98), de préférence une température constante adaptée aux espaces internes (51,52) du bâtiment.

20. Installation suivant au moins l'une des revendications précédentes,
**caractérisée en ce que**,
le chauffage mural extérieur (10,11) est muni de préférence de pierres à jaquettes (54 à 59), lesquelles sont enclenchées les unes sur les autres de telle façon que des canaux centraux/d'alimentation (62,63,64;106, 107,109) horizontaux et verticaux, voisins des pierres et à l'intérieur des jaquettes servent à la pose du système de conduites ou au moulage du béton.

21. Installation suivant au moins l'une des revendications précédentes,
**caractérisée en ce que**,
les pierres à jaquettes (54,55,56,57,58,59) faisant partie du chauffage mural extérieur (10,11) sont disposées de préférence, en profil longitudinal et en profil transversal, en forme de H à barre simple, de H à barre double ou de H à barre multiple.

22. Installation suivant la revendication 21,
**caractérisée en ce que**,
les jaquettes externes des pierres (54,55,56,57,58,59), faisant office de coques et dirigées vers l'extérieur, comportent la couche d'isolation calorifuge (67,65,66) qui se trouve dans la zone centrale (73), étant entendu que la barre du H (71,75) reliant la jaquette extérieure et la jaquette intérieure est de préférence recouverte entièrement ou partiellement d'une matière isolante.

23. Installation suivant au moins l'une des revendications précédentes,
**caractérisée en ce que**,
l'exécution du bac de dilatation (30) du dispositif de distribution solaire (5) dépend de la température de service maximale, de la température de repos, des différentes quantités de liquide antigel et des paramètres du dispositif de sûreté (16).

24. Installation suivant au moins l'une des revendications précédentes,
**caractérisée en ce que**,
tous les organes de réglage électrotechniques et électroniques sont groupés de préférence dans le dispositif de réglage (15), ces organes de réglages commandant de préférence par programme les opérations suivantes :
1.Connexion de la pompe thermique de saumure (14) avec les pompes de service en faisant partie (91,92) afin d'alimenter en saumure et en fluide de chauffage la pompe de chaleur (14).
2.Connexion de la pompe de circulation (93) pour le chauffage au sol (8) et/ou le chauffage mural intérieur (9) et réglage du mélangeur (101) d'après la température aller indiquée au détecteur (94), d'après la température extérieure indiquée au détecteur (95) et d'après une courbe de régulation.
3.Connexion de la pompe de circulation (96) pour les chauffages muraux extérieurs (10,11) disposés dans les murs extérieurs (35,36) d'après la température extérieure indiquée au détecteur (97) et réglage du mélangeur (103) d'après la température de consigne, d'après la température aller indiquée au détecteur (98) et d'après une courbe de régulation.
4.Connexion de la pompe de circulation (29) du dispositif de distribution solaire (5) lorsque l'on a atteint une température différentielle située entre la température indiquée au détecteur (99) dans les zones de sortie du collecteur solaire (3,4) et la température indiquée au détecteur (90) de l'accumulateur thermique de terre (23) disposé dans la partie latérale du bâtiment.
5. Mise en marche des pompes de service nécessaires de la pompe thermique de saumure (14) afin de répondre au besoin en chaleur de l'accumulateur combiné (6).
6. Connexion de la pompe de circulation (92) pour la circulation de l'eau industrielle conformément au moment fixé.
7. Traitement de préférence de cinq températures différentielles avec réglage d'une température de consigne, d'une température MINI. et MAXI. et d'un écart d'une valeur de consigne, et
8.Traitement et affichage par au moins un calorimètre (40).

25. Installation suivant au moins l'une des revendications précédentes,
**caractérisée en ce que**,
le dispositif de réglage (15), voire les systèmes régulateurs (79,80,81,82;74), sont installés dans une armoire de distribution électrique correspondante, voire dans un boîtier, de même qu'ils sont montés à proximité de la pompe thermique de saumure (14) et du dispositif de distribution solaire (5) hydraulique de construction compacte de préférence.
